# EUROPEAN PATENT SPECIFICATION

(11) **EP 3 211 030 B1**
(45) Date of publication and mention of the grant of the patent: **03.01.2024**
(21) Application number: 15852103.9
(22) Date of filing: 23.10.2015
(51) Int. Cl.: C08K 5/521, C08L 95/00

(54) **ADDITIVE FOR USING IN ASPHALT MIXTURES**
ADDITIV ZUR VERWENDUNG IN ASPHALTMISCHUNGEN
ADDITIF À UTILISER DANS DES MÉLANGES BITUMINEUX

(30) Priority: 24.10.2014 ES 201431569
(43) Date of publication of application: 30.08.2017
(73) Proprietor: Kao Corporation, S.A., 08210 Barbera del Valles - Barcelona (ES)
(72) Inventor: BUENO PERISÉ, Agustí, E-08210 Barberá del Vallés - Barcelona (ES); MUNDÓ BLANCH, Miquel, E-08210 Barberá del Vallés - Barcelona (ES); RIAZA MARTÍNEZ, Joan Antoni, E-08210 Barberá del Vallés - Barcelona (ES)
(74) Representative: Hoffmann Eitle
(86) International application number: PCT/ES2015/070765
(87) International publication number: WO 2016/062910

(56) References cited:
- EP-A1- 0 919 588
- EP-A2- 0 926 191
- WO-A1-2010/092300
- ES-A1- 2 192 469
- JP-A- 2003 128 927
- RU-C1- 2 223 294
- US-A1- 2010 192 805
- GASPAR GONZÁLEZ ET AL: "Peptization of asphaltene by various oil soluble amphiphiles", COLLOIDS AND SURFACES, vol. 52, 1 January 1991 (1991-01-01), pages 207-217, XP055461854, NL ISSN: 0166-6622, DOI: 10.1016/0166-6622(91)80015-G

## Description

### FIELD OF THE INVENTION

The present invention relates to the area of asphalt mixes. More specifically, the present invention relates to additives that are incorporated into bitumen before being mixed with the stone material or equivalent compound for manufacturing the asphalt mix and laying down said asphalt mix as a structural pavement or surface treatment.

### BACKGROUND OF THE INVENTION

Asphalt layers used for road construction and paving (hereinafter, asphalt) generally consist of a mixture of a stone material (aggregate) made up of components of different type and size and a petroleum-derived binder component such as bitumen or asphalt. A generic aggregate is made up of a mixture of coarse aggregates, for example stone material that has broken up, and fine materials such as sand, dust or other inorganic fillers. A typical asphalt mix paving composition can contain about 54% coarse aggregate, about 35% fine aggregate, about 5% stone dust, and close to 6% bitumen or asphalt serving as a binder.

Ideally, for the asphalt layer to have optimum mechanical properties, crushed stone particles must be coated by a continuous and homogenous film of the binder. Different manufacturing and working methodologies, fundamentally the following 3 types, have been developed to achieve said purpose:
- Hot mix asphalts: This preparation method is the most conventional method. It consists of mixing aggregates with bituminous products at a high temperature between 140°C and 180°C for sufficiently fluidizing the binder and attaining both aggregate coverage and mixture manageability. The working thereof (laying down and compacting same on the road) is also carried out at temperatures much higher than the ambient temperature.
- Cold mix asphalts: The preparation of cold mix asphalt and the working thereof are carried out at room temperature. Binder modification makes it possible to work at this temperature. Said component is in the form of bituminous emulsion (bitumen in water, added with emulsifying components.
   However, the field of application of prepared cold mixes is mainly limited to roads with low traffic density and to surface restoration operations (surfacings and groutings).
- Warm mix asphalt: The methods for preparing warm mixes or warm mix asphalt are based on modifying the properties of the binder and its interaction with the aggregate that will allow mixing and subsequently using same for paving at temperatures from 20°C to 55°C (much lower than those used in the conventional methods), without the resulting asphalt mix losing its mechanical properties.

### Warm mix asphalts

The main advantage derived from reducing the temperature of the warm mix asphalt manufacturing process is the energy savings. This is due to the fact that fuel consumption for asphalt mix production drops between 20 and 35% with respect to the conventional method (hot mix asphalts).

Another clear benefit is the possibility of paving places where heating equipment is not provided *in situ.* In such places, cooling which may occur while transporting the asphalt would entail problems when conventional asphalt mixes are used.

On the other hand, warm mix techniques allow a considerable reduction of toxic fume emissions with respect to hot mix asphalts, such as carbon monoxide, nitrous and sulfurous oxides. This reduction does not only entail an environmental advantage, but also allows making the work environment conditions safer for the operators of the sector by reducing their exposure to said toxic fumes.

The main challenge in warm mix preparation technologies is to obtain a balance in the mechanical properties produced by means of conventional techniques (hot mix). As described above, one of the strategies used is the addition of additives to the bitumen or asphalt modifying the rheological properties of the binder and/or its interaction with the aggregate. Said modifications must enable pavement mixing temperatures between 100°C and 140°C without negatively impacting the mechanical properties of the asphalt mix produced at conventional mixing temperatures.

Some of these mechanical properties of the resulting asphalt mix to be taken into account are:
- the fluidity of the hot mix asphalt and its manageability which have an impact on the energy and time required for its homogenization and compaction;
- the adherence of the aggregate to the bitumen in the asphalt mix;
- the compressive strength of the bitumen in the asphalt mix.
the resistance to aging, relating to the temperature to which the bitumen is subjected during the operations of preparing, spreading and compacting the bituminous mix.

In addition to the resulting mechanical properties in the asphalt mix, the additive must fulfill a series of requirements, including the following:
- the additive must be able to be readily dispersed in the hot bitumen;
- the additive must not cause phase separation with bitumen during molten bitumen storage;
- the bitumen with added additives must be able to be kept in molten state for a longer time without the additive losing performance;
- the bitumen with added additives must have a good performance for different types of aggregate.

To obtain these mechanical properties in warm mix asphalts and the additive requirements described above, a large variety of bituminous product compositions and application methods have been proposed.

Patent document WO2010/092300 A1 describes a system of additives for warm mix asphalts comprising a first component which is an adhesive agent and a second component selected from an ethoxylated fatty (poly)amine and an ethoxylated fatty amido(poly)amine. The system of additives allows reducing the working temperature of the asphalt mix without reducing the manageability of the asphalt mix, the hardness or the resistance to plastic deformation.

Patent document EP 2 209 853 B1 describes a combination of surface active agents with one or more asphalt or bitumen rheology modifiers, including waxes or resins. The surface active agents comprise amines, diamines, polyamines and ethoxylated alkyl polyamines, amidoamines, amidopolyamines, imidazolines and/or any of their salts or mixtures thereof. This additive combination allows reducing the mixing and compaction temperatures of 9.44 to 15.56°C without reducing the humidity resistance properties of the mix or its capacity to coat the surfaces of the aggregate.

Additives described in patent document EP 2 185 649 A0 are also part of the state of the art; said patent document describes a warm asphalt composition for paving comprising a lubricating additive. The lubricating additive comprises a lubricating surfactant, a lubricating non-surfactant, a lubricating acid or a combination thereof. The lubricating surfactant comprises a cationic surfactant such as alkylamine, amidoamine, alkyl quaternary ammonium salt or ethoxylated tallow diamine. The addition of the lubricating additive allows reducing the mixing and compaction temperature of 16.66 to 27.77°C compared to an asphalt composition without lubricating additive.

Patent document US 2010/192805 B2 describes an asphalt mix comprising the aggregate, bitumen or asphalt and an additive comprising phosphoric ester. The asphalt mix allows maintaining mechanical properties such as cold brittleness, solidity, fluidity, and cohesion, as well as providing a uniform distribution of the additives in the aggregates, and allows working with aggregate-binder mixing temperatures between 20 and 50°C below conventional mixing tem peratures.

Patent document ES2192469A1 describes branched polyamines and the addition salts thereof with various acids (hydrochloric, phosphoric, nitric, etc.) and the use thereof in bituminous emulsions.

Despite the variety of bituminous product compositions and application methods described in the state of the art, there is still a need to obtain bitumens with added additives for warm mix asphalts or warm mix which allow reducing the working temperature of the asphalt mix with a satisfactory mechanical behavior of asphalt mixes.

### BRIEF DESCRIPTION OF THE INVENTION

The authors of the present invention have found that including an additive for bitumen comprising at least one phosphoric ester of alkoxylated amine successfully modifies the interaction of the bitumen with the aggregate, allowing pavement or asphalt mix mixing and compaction temperatures of at least 15°C below conventional mixing and compaction temperatures (which are about 140 to 180°C). The mixing and compaction temperatures that are used with the additive of the present invention are preferably between 100°C and 160°C, more preferably between 100°C and 140°C, and even more preferably between 50 and 130°C. The mechanical properties of the asphalt mix of the invention are the same as those of conventional compositions.

Therefore, a first aspect of the invention relates to providing an additive for bitumen for asphalt mixes comprising at least one phosphoric ester of alkoxylated amine.

Another aspect of the present invention provides an additive for bitumen for asphalt mixes comprising at least one compound produced by means of the reaction of an alkoxylated alkylamine with phosphoric acid, phosphorus pentoxide or mixtures thereof.

In a particular embodiment, the additive for bitumen for asphalt mixes of the invention comprises at least one compound produced by means of the reaction of an alkoxylated alkylamine with phosphoric acid, phosphorus pentoxide or mixtures thereof, and furthermore at least one compound produced by means of the reaction of a fatty alcohol with phosphoric acid, phosphorus pentoxide or mixtures thereof.

In a particular embodiment, the additive for bitumen for asphalt mixes of the invention further comprises a phosphoric ester of fatty alcohol or, alternatively or additionally, a fluidizing agent.

Another aspect of the present invention provides a bituminous composition for asphalt mixes comprising the additive of the invention and bitumen.

An additional aspect of the present invention relates to an asphalt mix comprising the bituminous composition for asphalt mixes of the invention and an aggregate or stone aggregate.

Another aspect of the present invention provides a method for preparing the additive for bitumen for asphalt mixes of the invention which consists of:
- heating the precursor amine,
- gradually adding phosphorus pentoxide, phosphoric acid, or mixtures thereof, and
- then heating the reaction components at a temperature between 50°C and 130°C for at least 4 hours.

Another aspect of the present invention relates to a method for preparing the bituminous composition of the invention which comprises preparing the additive before the addition thereof to the bitumen, melting and then homogenizing.

Another aspect of the present invention relates to a method for preparing the asphalt mixes of the invention, which comprises preparing the additive before the addition thereof to the bitumen, and after addition to the aggregate.

An additional aspect of the present invention relates to the use of the additive for bitumen of the invention as a component in bituminous compositions and asphalt mixes.

Another aspect of the present invention relates to the use of the bituminous composition of the invention as a component in asphalt mixes.

An additional aspect of the present invention relates to the use of the asphalt mixes of the invention for paving roads.

In a particular embodiment, the asphalt mixes having the uses of the invention are warm mix asphalts, with mixing and compaction temperatures at least 15°C less than conventional mixing and compaction temperatures when manufacturing and laying down asphalt mixes. The mixing and compaction temperatures are preferably between 100°C and 160°C, more preferably between 100°C and 140°C, more preferably between 50 and 130°C.

### DETAILED DESCRIPTION OF THE INVENTION

### Additive

The main object of the present invention is to provide an additive for bitumen for asphalt mixes which allows pavement mixing and compaction temperatures at least 15°C less than conventional mixing temperatures, which means that temperatures between 100°C and 160°C, more preferably between 100°C and 140°C, more preferably between 50 and 130°C, can be used.

In the context of the present invention, the term "additive" refers to a chemical composition improving the chemical affinity between the binder and the aggregate as well as the performance of the asphalt mix.

Therefore, the objective of the present invention is achieved by means of an additive for bitumen for asphalt mixes comprising at least one phosphoric ester of alkoxylated amine represented by formula (I) 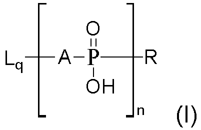 where
q is selected from 0 and 1;
L is selected from -H and the group 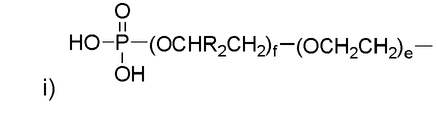
when q is 1;
A represents the group

   B-(OCH₂CH₂)ₐ-(CHR₂CH₂O)_{b}- ii),

   and
where A is linked to the phosporic group by means of the terminal of -(CHR₂CH₂O)b-;
R is selected from a -OH and A' group;
A' represents the group 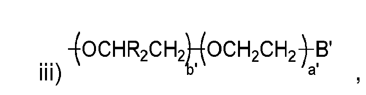 and where A' is linked to the phosphoric group by means of the terminal oxygen of -(OCHR₂CH₂)_{b}-B is selected from
   - groups 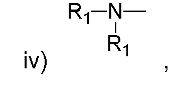 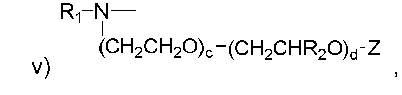 and 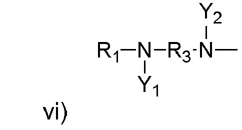
when q is 0; and from
   - groups 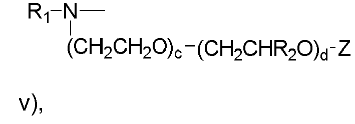 and 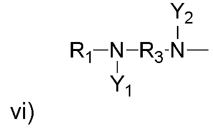
where A is linked to the phosphoric group by means of the terminal oxygen of -(CHR₂CH₂O)_{b}-;
R is selected from a -OH and A' group;
when q is 1; and
where B is linked to the A moiety by means of the terminal nitrogen of groups iv), v) and vi);
B' is selected from groups 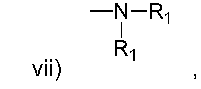 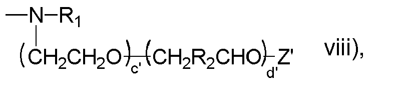
and 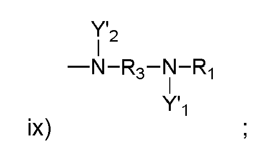
where B' is linked to the A' moiety by means of the terminal nitrogen of groups vii), viii) and ix);
Z is selected from
   - a single bond when q is 1 and where B is linked to L by means of said single bond, and
      --H and the group 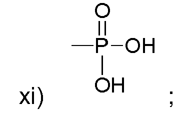 when q is 0;
Z' is selected from -H and the group 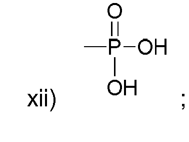
Y₁ is selected from -H and groups 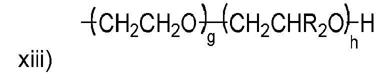 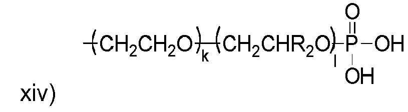
Y₂ is selected from
H and groups 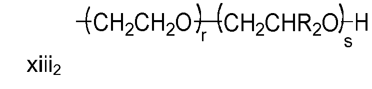 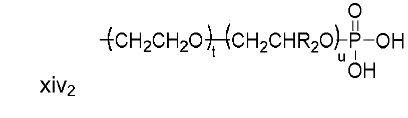
when q is 0;
Y₁ is selected from one of the following groups 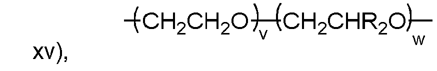 and 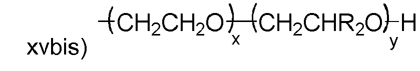
Y₂ is selected from one of the following groups 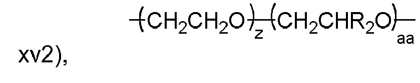 and 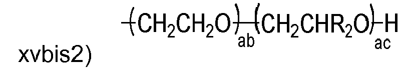
when q is 1; with the proviso that when Y₁ is XV, then Y₂ is XVbis2, and when Y₁ is XVbis, then Y₂ is XV2;
and where B is linked to L by means of the terminal oxygen of -(OCH₂CHR₂)_{w}- or (OCH₂CHR₂)ₐₐ₋;
Y₁' is selected from -H and groups 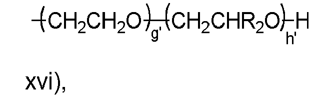 and 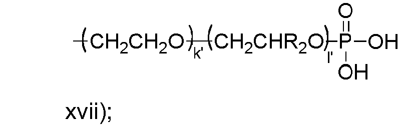
Y₂' is selected from -H and groups 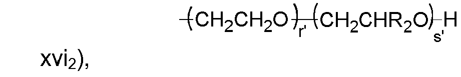 and 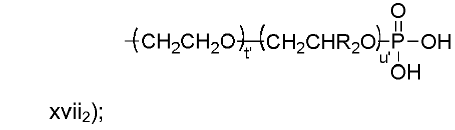
each R₁ is independently selected from an alkyl group and a terminal alkenyl group, linear or branched, having from 6 to 22 carbon atoms; preferably between 12 and 22 carbon atoms, and from 0 to 3 insaturations, wherein the terminal alkyl group and alkenyl group can be optionally substituted by a carboxyl group;
each R₂ is independently selected from hydrogen and a terminal alkyl group having from 1 to 4 carbon atoms, preferably a methyl group;
R₃ represents a non-terminal alkyl group having from 1 to 5 carbon atoms;
R₄ is a saturated or unsaturated, linear or branched alkyl or alkenyl group having from 6 to 22 carbon atoms.
each of the subscripts:
   a,a',c,c',e,e',g,g',k,k',r,r',t,t',v,x,z,ab is independently selected from a number from 0 to 10;
   preferably a number from 1 to 7;
   each of the subscripts:
      b,b',d,d',f,f',h,h',l,l',s,s',u,u',w,z,aa,ac' is independently selected from a number from 0 to 10;

The degree of alcoxylation is established by the sum of subscripts:
a+a'+b+b'+c+c'+d+d'+e+e'+f+f'+g+g'+h+h'+k+k'+l+l'+r+r'+s+s'+t+t'+u+u'+v+w+x+z+aa+ab+ac,
and corresponds to a number from 1 to 20; preferably a number from 1 to 10; and
n is selected from a number from 1 to 4.

Examples of linear and branched alkyl and alkenyl groups are alkyls and alkenyls derived from vegetable and animal oils and fats, such as palm, coconut, sunflower, soybean, palm olein, olive, canola, tallow and tall oil, possibly completely or partially hydrogenated and purified. Alternatively, a synthetic fatty acid can be used, such as palmitoleic acid, oleic acid, elaidinic acid, petroselinic acid, linoleic acid, linolenic acid, stearic acid, myristic acid, gadoleic acid, behenic acid, erucic acid or mixtures thereof. Palm oil, coconut oil, tallow and hydrogenated tallow are preferably used, more preferably tallow and hydrogenated tallow.

In a preferred embodiment, the phosphoric esters of alkoxylated amine of the present invention can be ethoxylated, propoxylated or a mixture thereof.

In the context of the present invention, the term "ethoxylated" refers to the addition of ethylene oxide to the precursor amine of the invention.

In the context of the present invention, the term "propoxylated" refers to the addition of propylene oxide to the precursor amine of the invention.

In the context of the present invention, the term "degree of alcoxylation" refers to the value of the number of moles of ethylene oxide and/or propylene oxide per molecule of formula (I)

In the context of the present invention, the numbers indicated by the subscripts of the formulas of the present application, as well as the numbers corresponding to the degrees of alcoxylation correspond to integers.

The order or sequence of ethylene oxide and propylene oxide groups is not critical for the invention. Therefore, the phosphoric esters of alkoxylated amine of the invention can contain ethylene oxide and propylene oxide in separated or randomly distributed blocks.

In a preferred embodiment, the additive for bitumen for asphalt mixes comprises a mixture of phosphoric esters of alkoxylated amine that are represented by formula (I).

In a preferred embodiment, the additive of the present invention comprises at least one phosphoric ester of alkoxylated dialkylmonoamine according to formula (I), where q is 0,
A is group ii),
B is group iv),

The degree of alcoxylation is established by the sum of subscripts:
a+b+a'+b'+c'+d'+g'+h'+k'+l'+r'+s'+t'+u', and corresponds to a number from 1 to 20, preferably from 1 to 7,
n is 1; and
having formula (11) 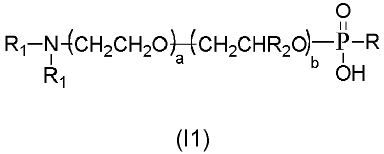 where
   R, R₁, R₂, a and b are as defined for formula (I).

In a preferred embodiment, the additive for bitumen for asphalt mixes comprises a mixture of phosphoric esters of alkoxylated dialkylamine represented by formula (11).

In a preferred embodiment, the phosphoric ester of alkoxylated dialkylmonoamine of the invention according to formula (11) comprises a mixture of at least one phosphoric monoester of alkoxylated dialkylmonoamine and at least one phosphoric diester of alkoxylated dialkylmonoamine.

An example of phosphoric ester of alkoxylated dialkylmonoamine of the invention according to formula (11) is as follows:

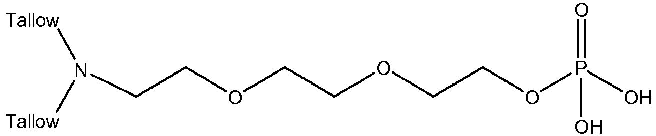

### Example I

In the context of the present invention, the term "tallow" refers to the tallow alkyl group that refers to mixtures with alkyl chains derived from a mixture of fatty acid derivatives with a composition mainly comprising between 14 and 20 carbon atoms and from 0 to 3 insaturations, that is linked to the amino group of the phosphoric ester of alkoxylated amine through the terminal carbon of the hydrocarbon chains.

In another preferred embodiment, the phosphoric ester of alkoxylated monoalkylmonoamine according to formula (I), where
q is 0,
A is group ii),
B is group v),

The degree of alcoxylation is established by the sum of subscripts:
a+b+c+d+a'+b'+c'+d'+g'+h'+k'+l'+r'+s'+t'+u', and corresponds to a number from 1 to 20,
preferably from 2 to 7,
n is 1; and
having formula (I2) 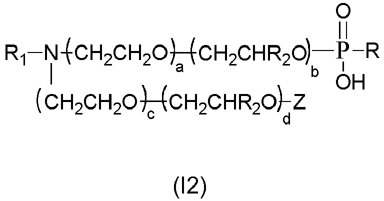 where
   R, R₁, R₂, Z, a, b, c and d are as defined for formula (I).

In a preferred embodiment, the additive for bitumen for asphalt mixes comprises a mixture of phosphoric esters of alkoxylated monoalkylmonoamine represented by formula (I2).

In a preferred embodiment, the phosphoric ester of alkoxylated monoalkylmonoamine of the invention according to formula (I2) comprises a mixture of at least one phosphoric monoester of alkoxylated monoalkylmonoamine and at least one phosphoric diester of alkoxylated monoalkylmonoamine.

Examples of phosphoric ester of alkoxylated monoalkylmonoamine represented by formula (I2) are as follows:
Example II 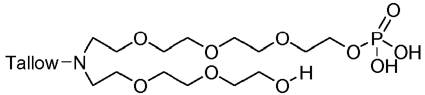
Example III

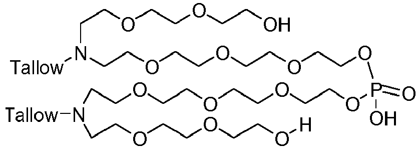

In a preferred embodiment, the additive of the present invention comprises at least one phosphoric ester of alkoxylated monoalkyldiamine according to formula (I)
where
q is 0,
A is group ii),
B is group vi),
The degree of alcoxylation is established by the sum of subscripts:
   a+b+g+h+k+l+r+s+t+u+v+w+x+y+z+aa+ab+ac+a'+b'+c'+d'+g'+h'+k'+l'+r'+s'+t'+u', and
   corresponds to a number from 1 to 20, preferably from 3 to 7,
   n is 1; and
   having formula (I3) 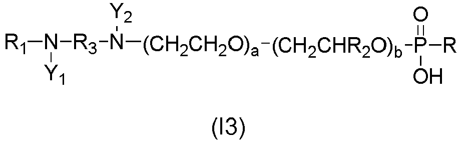
   where
   R, R₁, R₂, R₃, Y₁, Y₂, a and b are as defined for formula (I).

In a preferred embodiment, the additive for bitumen for asphalt mixes comprises a mixture of phosphoric esters of alkoxylated monoalkyldiamine represented by formula (I3).

In a preferred embodiment, the phosphoric ester of alkoxylated monoalkyldiamine of the invention according to formula (I3) comprises a mixture of at least one phosphoric monoester of alkoxylated monoalkyldiamine and at least one phosphoric diester of alkoxylated monoalkyldiamine.

Examples of phosphoric ester of alkoxylated monoalkyldiamine represented by formula (I3) are as follows:
Example III 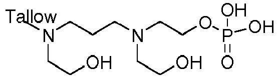
Example IV

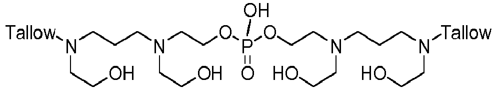

In a particular embodiment, the additive for bitumen for asphalt mixes of the invention further comprises a phosphoric ester of fatty alcohol having formula (I4) 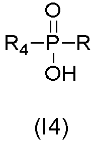 where
R is selected from a -OH and A' group;
A' represents the group 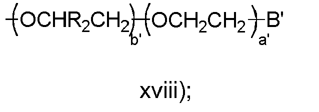
B' is selected from groups 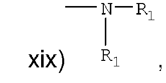 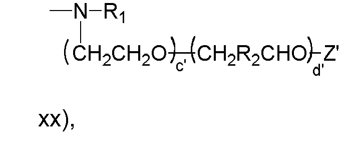 and 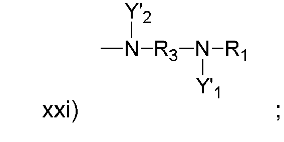 where B' is linked to the A' moiety by means of the terminal nitrogen of groups xix), xx) and xxi);
Z' is selected from -H and the group 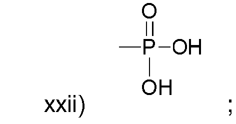
Y₁' is selected from -H and groups 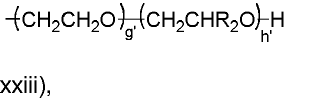 and 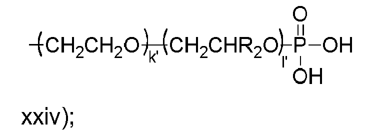
Y₂'is selected from -H and groups 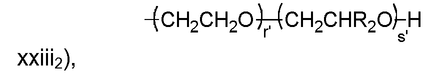 and 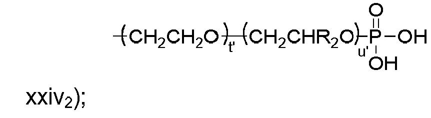
each R₁ is independently selected from an alkyl group and a terminal alkenyl group, linear or branched, having from 6 to 22 carbon atoms; preferably between 12 and 22 carbon atoms, and from 0 to 3 insaturations, wherein the terminal alkyl group and alkenyl group can be optionally substituted by a carboxyl group;
each R₂ is independently selected from hydrogen and a terminal alkyl group having from 1 to 4 carbon atoms, preferably a methyl group;
R₃ represents a non-terminal alkyl group having from 1 to 5 carbon atoms;
R4 is a saturated or unsaturated, linear or branched alkyl or alkenyl group having from 6 to 22 carbon atoms;
each of a',c',g',k',r',t' is independently selected from a number from 0 to 10; preferably a number from 1 to 7;
each of b',d',h',l',s',u' is independently selected from a number from 0 to 10,;

The degree of alcoxylation is established by the sum of a'+b'+c'+d'+g'+h'+k'+l'+r'+s'+t'+u', and corresponds to a number from 1 to 20; preferably a number from 1 to 10; and n is selected from a number from 1 to 4.

In a particular embodiment, the phosphoric esters of fatty alcohol of the present invention can be ethoxylated.

In the context of the present invention, the term "ethoxylated" refers to the addition of ethylene oxide to the precursor alcohol of the invention.

The order or sequence of ethylene oxide groups is not critical for the invention. Therefore, the phosphoric esters of ethoxylated fatty alcohol of the invention can contain ethylene oxide in separated or randomly distributed blocks.

In a preferred embodiment, the phosphoric esters of fatty alcohol of the present invention are not ethoxylated.

The additive of the invention can be produced by the reaction of an alkoxylated monoalkylmonoamine, alkoxylated monoalkyldiamine, alkoxylated dialkylmonoamine or mixtures thereof with a fatty alcohol, with phosphoric acid or phosphorus pentoxide, the reaction conditions being known, for example, as described in patent documents EP1204318 and WO2011009171.

A typical preparation involves first heating the alkoxylated amine, and optionally the fatty alcohol, at 50-85°C, and then gradually adding phosphorus pentoxide or polyphosphoric acid to the reaction vessel (referred to "phosphatization step"). The reaction components are then heated at a temperature comprised between 50 and 130°C, under nitrogen, for at least three hours.

Therefore, another aspect of the present invention provides an additive for bitumen for asphalt mixes comprising at least one compound produced by means of the reaction of an alkoxylated alkylamine of formula (II) with phosphoric acid, phosphorus pentoxide or mixtures thereof 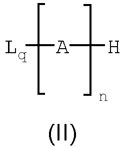 where
q is selected from 0 and 1;
L is selected from -H and the group 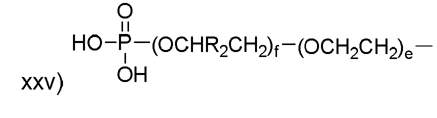
A represents the group

   B-(OCH₂CH₂)ₐ-(CHR₂CH₂O)_{b}- xxvi);

   and
B is selected from
   - groups 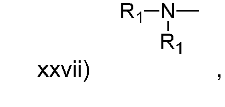 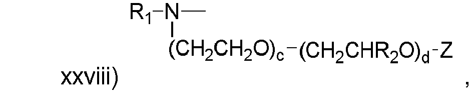 and 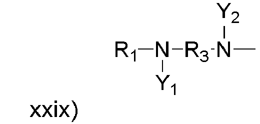 when q is 0; and from
   - groups 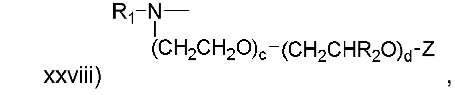 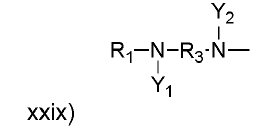 when q is 1; and
where B is linked to the A moiety by means of the terminal nitrogen of groups xxvii), xxviii) and xxix);
Z is selected from
   - a single bond when q is 1 and where B is linked to L by means of said bond, and
      --H and the group 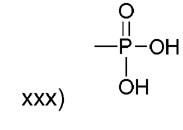
      when q is 0;
Y₁ is selected from
   --H and groups

      -(CH₂CH₂O)_{g}-(CH₂CHR₂O)ₕ-H xxxi) ,
   and 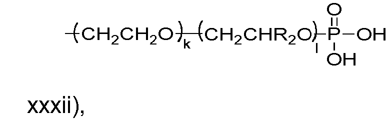
Y₂ is selected from
   - H and groups 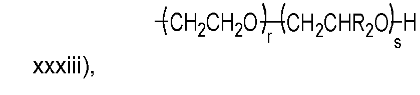 and 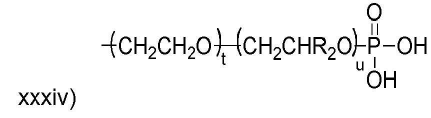
when q is 0;
Y₁ is selected from the following groups:
   xxxv), and 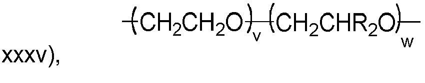
   xxxvi) 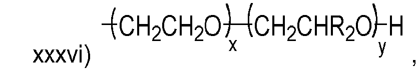
   and
Y₂ is selected from one of the following groups: 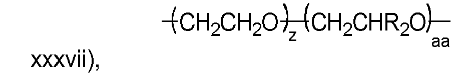 and 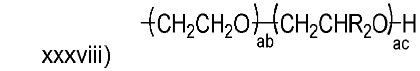
when q is 1; with the proviso that when Y₁ is XXXV, then Y₂ is XXXViii, and when Y₁ is XXXVi, then Y₂ is XXXVii;
and where B is linked to L by means of the terminal oxygen of

   -(OCH₂CHR₂)_{w}- or -(OCH₂CHR₂)ₐₐ;
each R₁ is independently selected from an alkyl group and a terminal alkenyl group, linear or branched, having from 6 to 22 carbon atoms; preferably between 12 and 22 carbon atoms, and from 0 to 3 insaturations, wherein the terminal alkyl group and alkenyl group can be optionally substituted by a carboxyl group;
each R₂ is independently selected from hydrogen and a terminal alkyl group having from 1 to 4 carbon atoms; preferably a methyl group;
R₃ is a non-terminal alkyl group having from 1 to 5 carbon atoms;
each of a,c,e,g,k,r,t,v,x,z,ab is independently selected from a number from 0 to 10; preferably a number from 1 to 7;
each of b,d,f,h,l,s,u,w,y,aa,ac is independently selected from a number from 0 to 10,; and
the degree of alcoxylation is established by the sum of a+b+c+d+e+f+g+h+k+l+r+s+t+u+v+w+x+y+z+aa+ab+ac, and corresponds to a number from 1 to 20; preferably a number from 1 to 10; and
n is selected from an integer from 1 to 4.

In a preferred embodiment, the additive for bitumen for asphalt mixes comprises a mixture of compounds produced by means of the reaction of an alkoxylated alkylamine of formula (II) with phosphoric acid, phosphorus pentoxide or mixtures thereof.

In a particular embodiment, the additive for bitumen for asphalt mixes of the invention comprises at least one compound produced by means of the reaction of an alkoxylated amine according to formula (II) with phosphoric acid, phosphorus pentoxide or mixtures thereof; where
A is group xxvi),
B is group xxvii),
q is 0,
n is 1; and
the alkoxylated amine is an alkoxylated dialkylmonoamine having formula (II1) 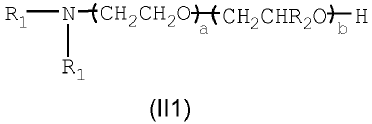 where
   R₁, R₂, a and b are as defined for formula (II). The degree of alcoxylation is established by the sum of subscripts a+b, and corresponds to a number from 1 to 20, preferably from 1 to 7.

In a preferred embodiment, the additive for bitumen for asphalt mixes comprises a mixture of compounds produced by means of the reaction of an alkoxylated dialkylmonoamine of formula (111) with phosphoric acid, phosphorus pentoxide or mixtures thereof.

The molar percentage of phosphoric monoester of alkoxylated dialkylmonoamine with respect to the total phosphorus loaded in the phosphatization step is comprised between a value greater than 0 and 100%, more preferably between 50-100%, even more preferably between 75-100%.

In a preferred embodiment, the percentage of phosphatization, expressed as the proportion of phosphorus equivalents loaded in the reaction and the terminal hydroxyl equivalents of the precursor amine, is in the interval of 33-100%.

In a particular embodiment, the additive for bitumen for asphalt mixes of the invention comprises at least one compound produced by means of the reaction of an alkoxylated amine according to formula (II) with phosphoric acid, phosphorus pentoxide or mixtures thereof; where
A is group xxvi),
B is group xxviii),
q is 0,
n is 1,
Z is H; and
the alkoxylated amine is an alkoxylated monoalkylmonoamine having formula (II2) 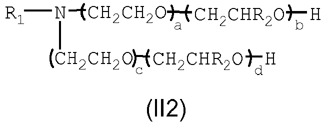 where
   R₁, R₂, Z, a, b, c and d are as defined for formula (II). The degree of alcoxylation is established by the sum of subscripts a+b+c+d, and corresponds to a number from 1 to 20, preferably from 2 to 7.

In a preferred embodiment, the additive for bitumen for asphalt mixes comprises a mixture of compounds produced by means of the reaction of an alkoxylated monoalkylmonoamine of formula (II2) with phosphoric acid, phosphorus pentoxide or mixtures thereof.

The molar percentage of phosphoric monoester of alkoxylated monoalkylmonoamine with respect to the total phosphorus loaded in the phosphatization step is comprised between a value greater than 0 and 100%, more preferably between 50-100%, even more preferably between 75-100%.

In a preferred embodiment, the percentage of phosphatization, expressed as the proportion of phosphorus equivalents loaded in the reaction and the terminal hydroxyl equivalents of the precursor amine, is in the interval of 33-100%.

In a particular embodiment, the additive for bitumen for asphalt mixes of the invention comprises at least one compound produced by means of the reaction of an alkoxylated amine according to formula (II) with phosphoric acid, phosphorus pentoxide or mixtures thereof; where
A is group xxvi),
B is group xxix),
q is 0,
n is 1,
Y₁ is group xxxi,
Y₂ is group xxxiii; and
the alkoxylated amine is an alkoxylated monoalkyldiamine having formula (II3) 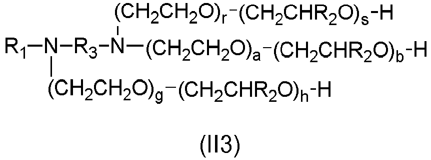 where
   R, R₁, R₂, R₃, a, b, g, h, r and s are as defined for formula (II). The degree of alcoxylation is established by the sum of subscripts a+b+g+h+r+s, and corresponds to a number from 1 to 20, preferably from 3 to 7.

In a preferred embodiment, the additive for bitumen for asphalt mixes comprises a mixture of compounds produced by means of the reaction of an alkoxylated monoalkyldiamine of formula (II3) with phosphoric acid, phosphorus pentoxide or mixtures thereof.

The molar percentage of phosphoric monoester of alkoxylated monoalkyldiamine with respect to the total phosphorus loaded in the phosphatization step is comprised between a value greater than 0 and 100%, more preferably between 50-100%, even more preferably between 75-100%.

In a preferred embodiment, the percentage of phosphatization, expressed as the proportion of phosphorus equivalents loaded in the reaction and the terminal hydroxyl equivalents of the precursor amine, is in the interval of 33-100%.

In a particular embodiment, the additive for bitumen for asphalt mixes of the invention comprising at least one compound produced by means of the reaction of an alkoxylated alkylamine of formula (II) with phosphoric acid, phosphorus pentoxide or mixtures thereof, further comprises at least one compound produced by means of the reaction of a fatty alcohol of formula (II4) with phosphoric acid, phosphorus pentoxide or mixtures thereof

R₄-OH (II4)

where
R₄ is a saturated or unsaturated, linear or branched alkenyl alkyl group having from 6 to 22 carbon atoms; with phosphoric acid, phosphorus pentoxide or mixtures thereof.

Examples of fatty alcohols used as precursors are fatty alcohols originating from vegetable and animal oils and fats, as well as fatty alcohols of synthetic origin. Examples of fatty alcohols include capryl alcohol (1-octanol), 2-ethylhexyl alcohol, pelargonic alcohol (1-nonanol), capric alcohol (1-decanol), lauryl alcohol (1-dodecanol), isotridecyl alcohol, myristyl alcohol (1-tetradecanol), cetyl alcohol (1-hexadecanol), palmitoleyl alcohol (cis-9-hexadecan-1-ol), stearyl alcohol (1-octadecanol), isostearyl alcohol (16-methylheptadecan-1-ol), elaidyl alcohol (9E-octadecen-1-ol), oleyl alcohol (cis-9-octadecen-1-ol), linoleyl alcohol (9Z, 12Z, 15Z-octadecatrien-1-ol), elaidolinolenyl alcohol (9E, 12E, 15E-octadecatrien-1-ol), ricinoleyl alcohol (12-hydroxy-9-octadecen-1-ol), arachidyl alcohol (1-eicosanol), behenyl alcohol (1-docosanol) and erucyl alcohol (cis-13-docosen-1-ol). Preferably, stearyl alcohol (1-octadecanol), 2-ethylhexyl alcohol, isotridecyl alcohol are used.

In a preferred embodiment, the fatty alcohol of the invention is selected from stearyl alcohol (1-octadecanol), 2-ethylhexyl alcohol and isotridecyl alcohol.

The molar percentage of alkoxylated amine with respect to the total phosphorus loaded in the phosphatization step is comprised between a value greater than 0 and 100%, more preferably between 50-100%, even more preferably between 75-100%.

In a preferred embodiment, the percentage of phosphatization, expressed as the proportion of phosphorus equivalents loaded in the reaction and the terminal hydroxyl equivalents of the precursor amine, is in the interval of 33-100%.

In a preferred embodiment, the proportion of hydroxyl group equivalents of the precursor alkoxylated amine and fatty alcohol equivalents is between 30-70%, preferably between 40-60%.

Therefore, in a particular embodiment the additive for bitumen for asphalt mixes of the invention further comprises the compound resulting from the reaction of the fatty alcohol of formula (114) with phosphoric acid, phosphorus pentoxide or mixtures thereof, or additionally or alternatively, a fluidizing agent.

The fluidizing agent allows easier handling of the additive for bitumen. The fluidizing agent consists of an organic or inorganic substance that has no reactivity with precursor materials of the reaction and allows improving the rheology of the reaction medium, such that the manageability of the reaction medium increases.

Examples of fluidizing agents are tertiary amines, tertiary amidoamines, fatty acids, silicones, olefins, amides or paraffins.

The fluidizing agent is preferably added before the phosphatization step of the precursor amine, although addition after the phosphatization step is also possible.

In a preferred embodiment, the fluidizing agent comprises a trialkylamine of formula (III) 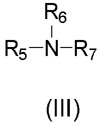 where
R5 represents a linear or branched alkyl or alkenyl group having from 6 to 22 carbon atoms, preferably from 10 to 16 carbon atoms;
R6 and R7 independently represent a linear or branched alkyl group having from 1 to 5 carbon atoms, preferably a methyl group.

In a particular embodiment, the trialkylamine content of formula (III) is comprised between 20-80% by weight with respect to the weight of the additive of the invention.

### Bituminous composition

Another aspect of the present invention relates to a bituminous composition for asphalt mixes comprising the additive for bitumen of the invention, and bitumen.

In the context of the present invention, the term "bitumen" refers to solid or viscous hydrocarbon binders that are prepared from natural hydrocarbons by distillation, oxidation or cracking, contain a low proportion of volatile products, have characteristic agglomerating properties and are essentially soluble in carbon sulfide.

In the context of the present invention, the term "bitumen" does not only refer to the petroleum product produced by direct distillation or by low pressure distillation, but also to the product originating from the extraction of tar and bituminous sands, synthetic asphalt, petroleum tar resins and/or paraffinic hydrocarbons and mixtures thereof.

Bitumens can be defined according to their behavior with the temperature and the presence or absence of different modifying agents.

In a preferred embodiment, the bitumen of the invention is bitumen with a B50/70-type penetration grade, with a recommended mixing temperature of 150-160°C and a recommended compaction temperature of 145-155°C.

In a preferred embodiment, the bituminous composition of the invention comprises:
- between 0.2% and 3% by weight, preferably between 0.3% and 1%, of the additive for bitumen, and
- between 99.8% and 97% by weight, preferably between 99.7% and 99%, of the bitumen.

The bituminous compositions of the present invention can further comprise, optionally, other known additives. Examples of such additives include, without limitation, rheology modifiers, plasticizing agents, cross-linking agents, stabilizing agents, dispersing agents, stripping agents, dyes, fibers, polymers, rubber powder, solvents, preservatives, surfactants, adhesion additives.

### Asphalt mix

Another aspect of the invention relates to an asphalt mix comprising the bituminous composition of the invention and an aggregate or stone aggregate.

The aggregate or stone aggregate is the mineral backbone of the asphalt mix. It may have a natural origin resulting from crushing hard stones that are not susceptible to weathering, or an artificial origin, as well as it may also result from grinding a pre-existing asphalt mix. The aggregate must be free of clays, organic matter and loams, and must not be susceptible to any type of weathering or significant physical-chemical alteration under the most unfavorable conditions that may arise in the aggregate use zone. It is made up of non-plastic and non-watersoluble particles.

The guideline according to the General Technical Specifications for Road and Bridge Works (PG-3) establishes requirements in the form of the aggregate particles as well as in particle size distribution, there being different types of grain size ranges.

In a particular embodiment, the aggregate or stone aggregate of the invention is an aggregate of silica composition with an AC16S-type grain size distribution according to the mentioned guideline.

### Asphalt mix mixing and compacting conditions

Another aspect of the present invention relates to a method of preparing the additive for bitumen of the invention which comprises:
- heating the precursor amine,
- gradually adding phosphorus pentoxide, phosphoric acid or mixtures thereof; and
- then heating the reaction components at a temperature between 50°C and 130°C for at least 4 hours.

In a particular embodiment, the method of preparing the additive for bitumen of the present invention comprises:
- heating the precursor amine and optionally the precursor fatty alcohol,
- gradually adding phosphorus pentoxide, phosphoric acid or mixtures thereof; and
- then heating the components at a temperature between 50°C and 130°C for at least 4 hours.

In a particular embodiment, the method of preparing the additive for bitumen of the present invention comprises:
- heating the precursor amine, optionally the precursor fatty alcohol, and a trialkylamine as fluidizer of the reaction medium,
- gradually adding phosphorus pentoxide, phosphoric acid or mixtures thereof; and
- then heating the components at a temperature between 50°C and 130°C for at least 4 hours.

Another aspect of the present invention relates to the method of preparing the bituminous compositions of the invention which comprises preparing the additive before the addition thereof to the bitumen, melting and then homogenizing.

Another aspect of the present invention relates to a method of preparing the asphalt mixes of the invention which comprises preparing the additive before the addition thereof to the bitumen, and after addition to the aggregate.

The present invention also relates to the use of the additives for bitumen of the present invention as a component in bituminous compositions and asphalt mixes.

The present invention also relates to the use of the bituminous compositions of the invention as components in asphalt mixes.

The present invention also relates to the use of the asphalt mixes of the present invention for paving roads.

In a preferred embodiment, the asphalt mixes having the uses described above are warm mix asphalts or warm mix, with mixing and compaction temperatures at least 15°C less than conventional mixing and compaction temperatures when manufacturing and laying down asphalt mixes, i.e., preferably between 100°C and 160°C, more preferably between 100°C and 140°C, and even more preferably between 50°C and 130°C.

### EXAMPLES

The first part of the experimental section (Examples 1 to 3) refers to the preparation of the additive for bitumen of the present invention, the preparation of bituminous product compositions for asphalt mixes of the present invention and the preparation of asphalt mixes of the present invention.

The second part of the experimental section (Example 4) refers to the evaluation of the mechanical properties of the asphalt mixes prepared from the present invention.

### Example 1: Preparation of the additive

### • Preparation of phosphoric ester of alkoxylated monoalkylmonoamine: Additives 1-5

### ✔ Preparation of phosphoric ester of alkoxylated monoalkylmonoamine (Additive 1)

220.1 g of ethoxylated tallow amine with 7 moles of ethylene oxide are loaded into a glass reactor equipped with a stirrer and a temperature probe and it is heated at 60°C; 3.3 g of phosphorus pentoxide (P₂O₅) are added for 1 hour and it is left to react without raising the temperature above 80°C. 27.6 g of polyphosphoric acid (APP 116%) are then added for one hour and it is left to react between 80-85°C for 8 hours until the reaction ends.

### ✔ Preparation of phosphoric ester of alkoxylated monoalkylmonoamine (Additive 2 to 4)

Additives 2 to 4 are prepared in a manner similar to the preparation of Additive 1.

### ✔ Preparation of phosphoric ester of alkoxylated monoalkylmonoamine (Additive 5)

250.1 g of propoxylated tallow amine with 4.5 moles of propylene oxide are loaded into a glass reactor equipped with a stirrer and a temperature probe and it is heated at 50°C; 11.7 g of phosphoric acid (85%) are added for 30 minutes and it is left to react for 30 minutes at the temperature of 55-60°C. 28.2 g of phosphorus pentoxide (P₂O₅) are then added for one hour maintaining the temperature below 80°C. It is left to react between 85°C-90°C for 9 hours until the reaction ends.

### • Preparation of phosphoric ester of alkoxylated dialkylmonoamine: Additives 7-8

Additives 7-8 are prepared in a manner similar to the preparation of additive 1.

### • Preparation of phosphoric ester of alkoxylated dialkylmonoamine: Additive 6

199.9 g of dialkylmonoamine of hydrogenated and ethoxylated tallow with 3 moles of ethylene oxide are loaded into a glass reactor equipped with a stirrer and a temperature probe; the mixture is heated at 75°C and 18.7 g of phosphorus pentoxide are added for 4 hours without allowing the temperature to go above 80°C, it is left to react for 10 hours maintaining the temperature between 80°C-85°C.

### • Preparation of mixtures of phosphoric ester of alkoxylated monoalkylmonoamine and phosphoric ester of fatty alcohol: Additives 9-10

### ✔ Preparation of mixtures of phosphoric ester of alkoxylated monoalkylmonoamine and phosphoric ester of fatty alcohol Additive 9)

150.0 g of ethoxylated tallow amine with 4.5 moles of ethylene oxide and 126.7 g of isotridecyl alcohol are loaded into a glass reactor equipped with a stirrer and a temperature probe; the mixture is heated at 60°C and 43.7 g of phosphorus pentoxide are added for 1 hour. It is left to react without allowing the temperature to go above 80°C. 44.6 g of polyphosphoric acid are then added for one hour and it is left to react between 80°C and 85°C for 8 hours.

### ✔ Preparation of mixtures of phosphoric ester of alkoxylated monoalkylmonoamine and phosphoric ester of fatty alcohol Additive 10)

100.0 g of ethoxylated tallow amine with 4.5 moles of ethylene oxide and 118.0 g of stearyl alcohol are loaded into a glass reactor equipped with a stirrer and a temperature probe; the mixture is heated at 60°C and 40.1 g of phosphorus pentoxide are added for 2 hours without allowing the temperature to go above 80°C; it is left to react for 8 hours maintaining the temperature between 80°C and 85°C.

### • Preparation of mixtures of phosphoric ester of alkoxylated monoalkylmonoamine and a fluidizer (trialkylamine): Additive 11-12

### ✔ Preparation of mixtures of phosphoric ester of alkoxylated monoalkylmonoamine and a fluidizer (dimethyl alkylamine) (Additive 11)

150.0 g of ethoxylated tallow amine with 4.5 moles of ethylene oxide and 151.3 g of dimethyl lauryl amine are loaded into a glass reactor equipped with a stirrer and a temperature probe; the mixture is heated at 70°C and 73.2 g of polyphosphoric acid are added for 1 hour at 75°C; it is left to react for 8 hours maintaining the temperature between 80°C and 85°C until the reaction ends.

### ✔ Preparation of mixtures of phosphoric ester of alkoxylated monoalkylmonoamine and a fluidizer (dimethyl alkylamine) (Additive 12)

150.0 g of ethoxylated tallow amine with 4.5 moles of ethylene oxide and 142.5 g of dimethyl lauryl amine are loaded into a glass reactor equipped with a stirrer and a temperature probe; it is heated at 60°C and 24.9 g of phosphorus pentoxide are then added for 1 hour; it is left to react without allowing the temperature to go above 80°C. 25.4 g of polyphosphoric acid are then added for 1 hour and it is left to react for 8 hours maintaining the temperature between 80-85°C until the reaction ends.

Table 1.a summarizes the compositions of the additives that were prepared according to the invention (Additives 1-10)

Table 1.b shows the prepared compositions comprising an additive according to the invention and a fluidizer (Additives 11-12)

**Table 1.a**

| **Additive** | **Precursor component** | **Precursor amine (g)** | **P₂O ₅ (9)** | **AP P 116 % (g)** | **H₃P O₄ (g)** | **Fatty alcohol (g)** | **EO** | **PO** | **% P** | **% m** |
|---|---|---|---|---|---|---|---|---|---|---|
| **1** | tallow amine | 220.1 | 3.3 | 27.6 | - | - | 7 | 0 | 50 | 90 |
| **2** | tallow amine | 194.9 | 16.3 | 16.6 | - | - | 4.5 | 0 | 50 | 75 |
| **3** | tallow amine | 220.0 | 6.6 | 55.3 | - | - | 7 | 0 | 100 | 90 |
| **4** | tallow amine | 220.2 | 14.6 | 14.9 | - | - | 7 | 0 | 50 | 75 |
| **5** | tallow amine | 250.1 | 28.2 | - | 11.7 | - | 0 | 4.5 | 50 | 75 |
| **6** | hydrogenated tallow dialkylamine | 199.9 | 18.7 | - | 7.7 | - | 3 | 0 | 33 | 75 |
| **7** | N-(3-aminopropyl)tallow amine | 200.0 | 3.6 | 30.0 | - | - | 3 | 0 | 50 | 75 |
| **8** | N-(3-aminopropyl)tallow amine | 300.1 | 3.3 | 27.6 | - | - | 6.5 | 0 | 50 | 75 |
| **9** | hydrogenated tallow amine isotridecyl alcohol | 150.0 | 43.7 | 44.6 | - | - | 4.5 | 0 | 50 | 75 |
| | | - | - | - | - | 126.7 | 0 | 0 | 100 | |
| **10** | hydrogenated tallow amine oleocetyl alcohol | 100.0 | 40.1 | - | - | - | 4.5 | 0 | 50 | 50 |
| | | - | - | - | - | 118.0 | 0 | 0 | 100 | |

| | | | | | | | | | | |
|---|---|---|---|---|---|---|---|---|---|---|
| EO/ PO: moles of ethylene oxide and propylene oxide loaded per initial mole of amine, respectively %P: proportion of terminal hydroxyl equivalents and phosphorus equivalents loaded in the phosphatization step % m: expected percentage according to loads of phosphoric monoester with respect to phosphorus equivalents loaded in the phosphatization step | | | | | | | | | | |

**Table 1.b**

| **Additive** | **Precursor component** | **Fatty amine (g)** | **P₂O₅ (g)** | **APP 116% (g)** | **Dimethyl alkyl amine (g)** | **EO** | **PO** | **% P** | **% m** |
|---|---|---|---|---|---|---|---|---|---|
| 11 | Tallow amine | 150.0 | - | 73.2 | - | 4.5 | 0 | 66 | 75 |
| | Dimethyl lauryl amine | - | - | - | 151.3 | - | - | - | |
| 12 | Tallow amine | 150.0 | 24.9 | 25.4 | - | 4.5 | 0 | 50 | 75 |
| | Dimethyl lauryl amine | - | - | - | 142.5 | - | - | - | |

| | | | | | | | | | |
|---|---|---|---|---|---|---|---|---|---|
| EO/ PO: moles of ethylene oxide and propylene oxide loaded per initial mole of amine, respectively %P: proportion of terminal hydroxyl equivalents and phosphorus equivalents loaded in the phosphatization step % m: expected percentage according to loads of phosphoric monoester with respect to phosphorus equivalents loaded in the phosphatization step | | | | | | | | | |

### Example 2: Addition of additives to the bitumen

The tests are performed using asphalt bitumen provided by Proas (a refinery in Tarragona) which complies with the specifications of B50/70 of Article 211 of the General Technical Specifications for Road and Bridge Works (PG-3) and with the specifications listed in the National Annex of the UNE EN 12591 standard for bitumen 50/70. The recommended mixing temperature for this bitumen is 150-160°C, and compaction temperature is 145-155°C.

The additives prepared in Example 1 are metered onto the molten bitumen at 160°C, at a proportion of 0.4 g of additive per 100 g of bitumen, homogenizing the sample by means of manual stirring with the help of a spatula.

Table 2 summarizes the bitumens with added additives according to the additive addition method that has been described.

**Table 2**

| **Bitumen with added additives** | **Original bitumen** | **Additive** | **% additive** |
|---|---|---|---|
| **A0*** | B 50/70 | -- | 0 |
| **A1** | B 50/70 | 1 | 0.4 |
| **A2** | B 50/70 | 2 | 0.4 |
| **A3** | B 50/70 | 3 | 0.4 |
| **A4** | B 50/70 | 4 | 0.4 |
| **A5** | B 50/70 | 5 | 0.4 |
| **A6** | B 50/70 | 6 | 0.4 |
| **A7** | B 50/70 | 7 | 0.4 |
| **A8** | B 50/70 | 8 | 0.4 |
| **A9** | B 50/70 | 9 | 0.4 |
| **A10** | B 50/70 | 10 | 0.4 |
| **A11** | B 50/70 | 11 | 0.4 |
| **A12** | B 50/70 | 12 | 0.4 |

| | | | |
|---|---|---|---|
| *Bitumen without added additives (blank) | | | |

### Example 3: Preparation of asphalt mixes: mixtures of bitumen with added additives with mineral aggregate

Mixtures of bitumen with added additives with mineral aggregate are prepared in two different ways: by coating the aggregate with bitumen (Example 3.1), and by preparing specimens of said asphalt mix (Example 3.2).

### • 3.1 Coating the aggregate with bitumen

100 g of clean and dry porphyry-type aggregate having a size of 12/18 mm are taken and heated at the mixing temperature for at least 2 hours. 4 g of molten bitumen with added additives are then poured at the same temperature and mixed with the help of a spatula until completely coating the aggregate. The mixture is then poured on a nonporous surface and left to cure from 18 to 24 hours at room temperature.

Two coated aggregate samples are prepared for each bitumen sample: a first sample having bitumen with freshly added additives, and a second sample after aging the bitumen with added additives at 160°C in a closed container for five days.

Table 3 summarizes the prepared coated aggregates:

**Table 3**

| **Coated aggregate** | **Bitumen with added additives** | **Mixing temperature (°C)** |
|---|---|---|
| **B0** | A0 | 160 |
| **B1** | A1 | 120 |
| **B2** | A2 | 120 |
| **B3** | A3 | 120 |
| **B4** | A4 | 120 |
| **B5** | A5 | 120 |
| **B6** | A6 | 120 |
| **B7** | A7 | 120 |
| **B8** | A8 | 120 |
| **B9** | A9 | 120 |
| **B10** | A10 | 120 |
| **B11** | A11 | 120 |
| **B12** | A12 | 120 |

### • 3.2 Preparation of asphalt mix specimens

The specimens are prepared as described in Section 3.1 of the NLT-161/84 standard. The aggregate used is a porphyry-type aggregate with a AC16S-type grain size distribution as described in Article 542 of the General Technical Specifications for Road and Bridge Works (PG-3). Mixing is performed using a mechanical mixer provided with heating. Compaction takes place immediately after mixing, bringing the molds to the mixing temperature. At least six specimens of each type of asphalt mix are prepared. 1800 g of aggregate and 90 g of bitumen are used for the preparation of each specimen.

Table 4 summarizes the prepared asphalt mixes, describes the type of bitumen and the mixing and compaction temperatures used in each case:

**Table 4**

| **Asphalt mix** | **Bitumen with added additives** | **Mixing T (°C)** |
|---|---|---|
| **C0** | A0 | 160 |
| **C00** | A0 | 120 |
| **C1** | A1 | 120 |
| **C2** | A2 | 120 |
| **C3** | A3 | 120 |
| **C4** | A4 | 120 |
| **C5** | A5 | 120 |
| **C6** | A6 | 120 |
| **C7** | A7 | 120 |
| **C8** | A8 | 120 |
| **C9** | A9 | 120 |
| **C10** | A10 | 120 |
| **C11** | A11 | 120 |
| **C12** | A12 | 120 |

### Example 4: Performance of the asphalt mixes prepared with the compositions of the present invention

### • Tests for testing the adhesiveness of bitumen on the surface of the aggregate

Asphalt mixes with bitumen with added additives prepared in Section 3.1 are used for this test.

A beaker is filled with 1000 mL of water and heated to boiling on a heating plate. Immersion of the coated aggregate sample is performed, preventing said sample from coming into contact with the bottom of the beaker by placing a metal mesh about 2-3 cm from the bottom. Boiling is maintained for 10 minutes. The beaker is then removed from the heating plate and cold water is added until the content cools down completely, preventing the water stream from directly striking the surface of the coated aggregate. The mixture is left to dry at room temperature on a piece of blotting paper. Finally, the percentage of surface coated with bitumen is visually quantified.

For each additive addition method, the test is performed with both coated aggregate samples described in Example 3.1:, i.e., bitumen with freshly added additives and bitumen with added additives and aged for 5 days at 160°C.

Table 5 summarizes the results of remaining coating attained with blank bitumen, and bitumen added with different additives at 0.4%.

**Table 5**

| **Test ref.** | **Coated aggregate** | **% of remaining coating** | |
|---|---|---|---|
| | | **Coated with fresh bitumen** | **Coated with aged bitumen** |
| **D0** | B0 | 46 | 34 |
| **D1** | B1 | 97 | 97 |
| **D2** | B2 | 97 | 96 |
| **D3** | B3 | 98 | 96 |
| **D4** | B4 | 98 | 97 |
| **D5** | B5 | 94 | 94 |
| **D6** | B6 | 97 | 86 |
| **D7** | B7 | 99 | 97 |
| **D8** | B8 | 98 | 97 |
| **D9** | B9 | 97 | 94 |
| **D10** | B10 | 90 | 89 |
| **D11** | B11 | 95 | 82 |
| **D12** | B12 | 93 | 82 |

The results show how the additives provide a good adhesiveness of the bitumen on the aggregate, even when the temperature at which mixing takes place (120°C) is less than that normally used. It is also observed that the additives do not lose their adhesiveness improving capability after storing the bitumen with added additives at temperatures that are even greater than those used for mixing.

### • Tests for testing the compressive strength of asphalt mix specimens

Asphalt mixes with bitumen with added additives prepared in Section 3.2 are used for this test.

Tests are performed in dry and wet conditions on the asphalt mix specimens according to NLT-161/84 and NLT-162/84 standards.

Table 6 summarizes the compression results attained with blank bitumen (without added additives) and bitumen with added additives.

**Table 6**

| **Test ref.** | **Asphalt mix** | **Maximum compression in a dry condition (kPa)** | **Maximum compression in a wet condition (kPa)** |
|---|---|---|---|
| **E0** | C0 | 2930 | 2470 |
| **E00** | C00 | 2460 | 1200 |
| **E1** | C1 | 2740 | 2330 |
| **E2** | C2 | 3040 | 2410 |
| **E3** | C3 | 2590 | 2120 |
| **E4** | C4 | 2600 | 2230 |
| **E5** | C5 | 2810 | 2172 |
| **E6** | C6 | 2584 | 2445 |
| **E7** | C7 | 2678 | 2384 |
| **E8** | C8 | 2730 | 1995 |
| **E9** | C9 | 2844 | 2451 |
| **E10** | C10 | 2793 | 2267 |
| **E11** | C11 | 2659 | 2248 |
| **E12** | C12 | 2803 | 2364 |

It can be observed how the additives improve the compressive strength of the asphalt mixes prepared at reduced temperatures (120°C), values similar to those attained with asphalt mixes without additive prepared at a higher temperature (160°C) being obtained.

## Claims

1. An additive for bitumen for asphalt mixes comprising at least one phosphoric ester of alkoxylated amine represented by formula (I) 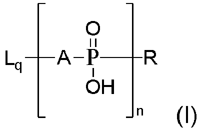 where
q is selected from 0 and 1;
L is selected from -H and the group 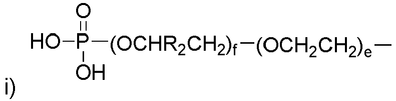
when q is 1;
A represents the group
B-(OCH₂CH₂-(CHR₂CH₂O)_{b}- ii),
and
where A is linked to the phosphoric group by means of the terminal oxygen of -(CHR₂CH₂O)_{b}-;
R is selected from a -OH and A' group;
A' represents the group 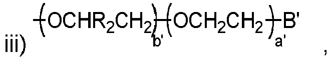 and
where A' is linked to the phosphoric group by means of the terminal oxygen of -(OCHR₂CH₂)_{b}-
B is selected from - groups 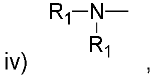 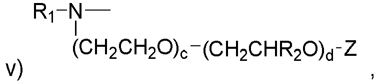 and 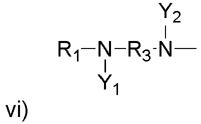
when q is 0; and from - groups 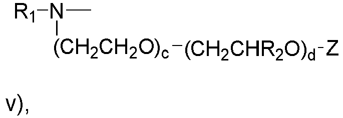 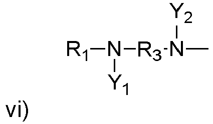
when q is 1; and
where B is linked to the A moiety by means of the terminal nitrogen of groups iv), v) and vi);
B' is selected from groups 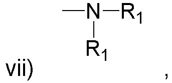 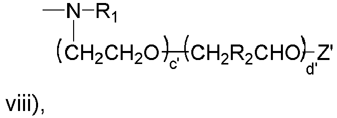 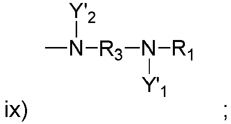
where B' is linked to the A' moiety by means of the terminal nitrogen of groups vii), viii) and ix);
Z is selected from
- a single bond when q is 1 and where B is linked to L by means of said single bond, and --H and the group 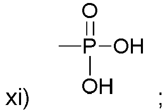 when q is 0;
Z' is selected from -H and the group 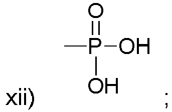
Y₁ is selected from -H and groups 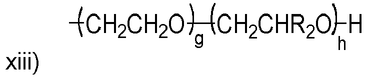 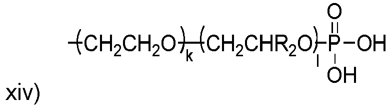
Y₂ is selected from H and groups 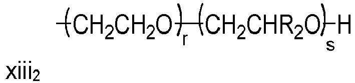 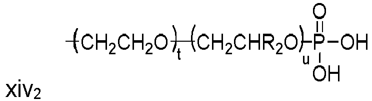
when q is 0;
Y₁ is selected from one of the following groups 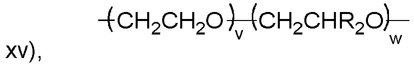 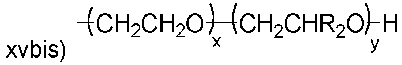
Y₂ is selected from one of the following groups 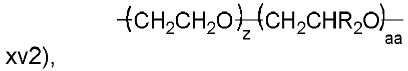 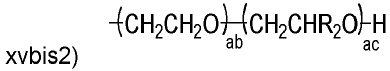
when q is 1; with the proviso that when Y₁ is XV, then Y₂ is XVbis2, and when Y₁ is XVbis, then Y₂ is XV2;
and where B is linked to L by means of the terminal oxygen of -(OCH₂CHR₂)_{w}- or (OCH₂CHR₂)ₐₐ₋;
Y₁' is selected from -H and groups 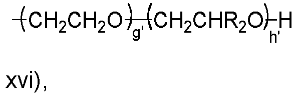 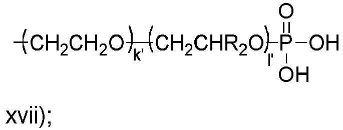
Y₂' is selected from -H and groups 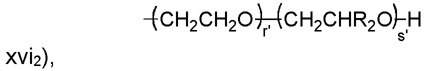 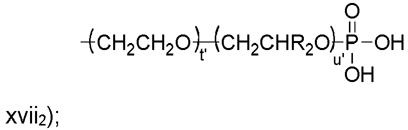
each R₁ is independently selected from an alkyl group and a terminal alkenyl group, linear or branched, having from 6 to 22 carbon atoms; preferably between 12 and 22 carbon atoms, and from 0 to 3 insaturations, wherein the terminal alkyl group and alkenyl group can be optionally substituted by a carboxyl group;
each R₂ is independently selected from hydrogen and a terminal alkyl group having from 1 to 4 carbon atoms, preferably a methyl group;
R₃ represents a non-terminal alkyl group having from 1 to 5 carbon atoms;
R₄ is a saturated or unsaturated, linear or branched alkyl or alkenyl group having from 6 to 22 carbon atoms,
each of the subscripts:
a,a',c,c',e,e',g,g',k,k',r,r',t,t',v,x,z,ab is independently selected from a number from 0 to 10; preferably a number from 1 to 7;
each of the subscripts:
b,b',d,d',f,f',h,h',I,I',s,s',u,u',w,z,aa,ac' is independently selected from a number from 0 to 10;
the degree of alcoxylation established by the sum of subscripts a+a'+b+b'+c+c'+d+d'+e+e'+f+f'+g+g'+h+h'+k+k'+l+l'+r+r'+s+s'+t+t'+u+u'+v+w+x+z+aa+ab+a c is a number from 1 to 20; preferably a number from 1 to 10; and
n is selected from a number from 1 to 4.

2. The additive for bitumen according to claim 1, wherein the phosphoric ester of alkoxylated amine according to formula (I) has formula (I1) 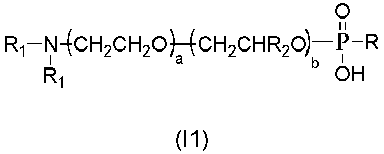
where the degree of alcoxylation established by the sum of subscripts a+b+a'+b'+c'+d'+g'+h'+k'+l'+r'+s'+t'+u' is a number from 1 to 20, preferably from 1 to 7; and R, R₁, R₂, a and b are as defined in claim 1; or
wherein the phosphoric ester of alkoxylated amine according to formula (I) has formula (I2), 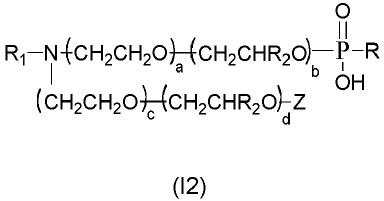
where the degree of alcoxylation established by the sum of subscripts, a+b+c+d+a'+b'+c'+d'+g'+h'+k'+l'+r'+s'+t'+u' is a number from 1 to 20, preferably from 2 to 7; and
R, R₁, R₂, Z, a, b, c and d are as defined in claim 1; or
wherein the phosphoric ester of alkoxylated amine according to formula (I) has formula (I3), 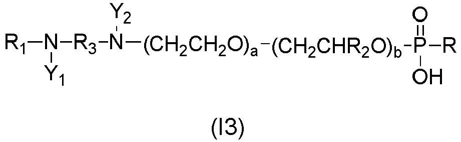
where the degree of alcoxylation established by the sum of subscripts a+b+g+h+k+l+r+s+t+u+v+w+x+y+z+aa+ab+ac+a'+b'+c'+d'+ +g'+h'+k'+I'+r'+s'+t'+u' is a number from 1 to 20, preferably from 3 to 7; and
R, R₁, R₂, R₃, Y₁, Y₂, a and b are as defined in claim 1.

3. The additive for bitumen according to claim 1 or 2, further comprising a phosphoric ester of fatty alcohol having formula (I4) 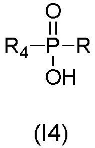 where
R is selected from a -OH and A' group;
A' represents the group 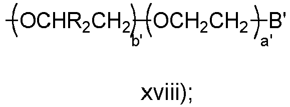
B' is selected from groups 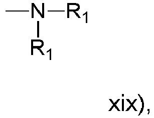 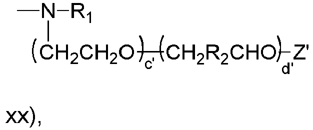 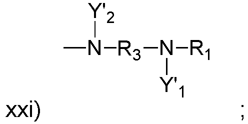
where B' is linked to the A' moiety by means of the terminal nitrogen of groups xix), xx) and xxi);
Z' is selected from -H and the group 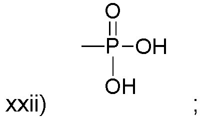
Y₁' is selected from -H and groups 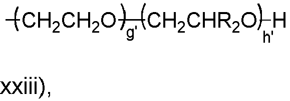 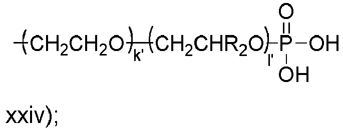
Y₂'is selected from -H and groups 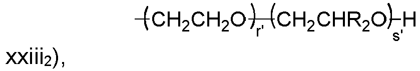 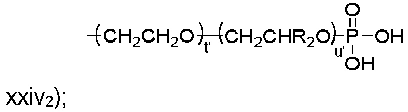
each R₁ is independently selected from an alkyl group and a terminal alkenyl group, linear or branched, having from 6 to 22 carbon atoms; preferably between 12 and 22 carbon atoms, and from 0 to 3 insaturations, wherein the terminal alkyl group and alkenyl group can be optionally substituted by a carboxyl group;
each R₂ is independently selected from hydrogen and a terminal alkyl group having from 1 to 4 carbon atoms, preferably a methyl group;
R₃ represents a non-terminal alkyl group having from 1 to 5 carbon atoms;
R4 is a saturated or unsaturated, linear or branched alkyl or alkenyl group having from 6 to 22 carbon atoms;
each of a',c',g',k',r',t' is independently selected from a number from 0 to 10; preferably a number from 1 to 7;
each of b',d',h',l',s',u' is independently selected from a number from 0 to 10,;
the degree of alcoxylation established by the sum of a'+b'+c'+d'+g'+h'+k'+l'+r'+s'+t'+u' is a number from 1 to 20; preferably a number from 1 to 10; and
n is selected from a number from 1 to 4.

4. The additive for bitumen according to any of claims 1 to 3, further comprising a fluidizing agent.

5. An additive for bitumen for asphalt mixes comprising at least one compound produced by means of the reaction of an alkoxylated alkylamine of formula (II) with phosphoric acid, phosphorus pentoxide or mixtures thereof 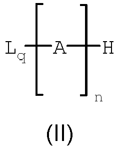 where
q is selected from 0 and 1;
L is selected from -H and the group 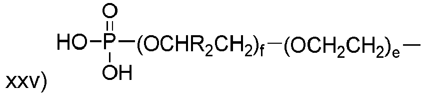
A represents the group 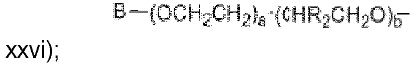
B is selected from
- groups 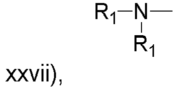 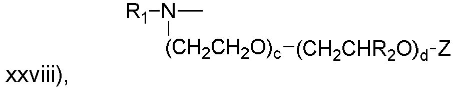 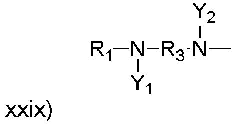 when q is 0; and from
- groups 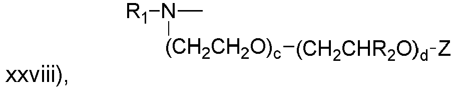 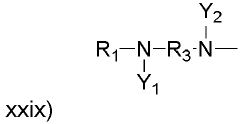
when q is 1; and
where B is linked to the A moiety by means of the terminal nitrogen of groups xxvii), xxviii) and xxix);
Z is selected from
- a single bond when q is 1 and where B is linked to L by means of said bond, and --H and the group when q is 0; 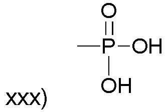
Y₁ is selected from
--H and groups 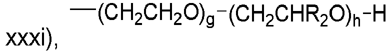 and 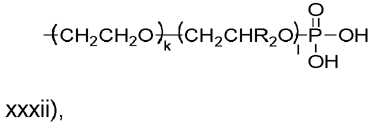
Y₂ is selected from -H and groups 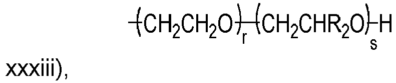 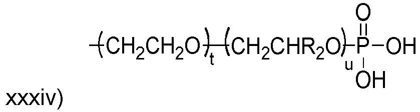
when q is 0;
Y₁ is selected from the following groups: 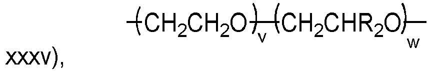 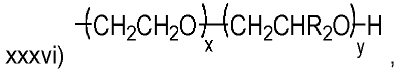 and
Y₂ is selected from one of the following groups: 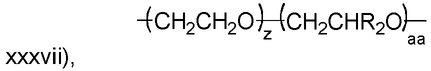 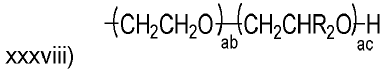
when q is 1; with the proviso that when Y₁ is XXXV, then Y₂ is xxxviii, and when Y₁ is xxxvi, then Y₂ is xxxvii;
and where B is linked to L by means of the terminal oxygen of -(OCH₂CHR₂)_{w}- or -(OCH₂CHR₂)ₐₐ₋;
each R₁ is independently selected from an alkyl group and a terminal alkenyl group, linear or branched, having from 6 to 22 carbon atoms; preferably between 12 and 22 carbon atoms,
and from 0 to 3 insaturations, wherein the terminal alkyl group and alkenyl group can be optionally substituted by a carboxyl group;
each R₂ is independently selected from hydrogen and a terminal alkyl group having from 1 to 4 carbon atoms; preferably a methyl group;
R₃ is a non-terminal alkyl group having from 1 to 5 carbon atoms;
each of a,c,e,g,k,r,t,v,x,z,ab is independently selected from a number from 0 to 10; preferably a number from 1 to 7;
each of b,d,f,h,l,s,u, w,y,aa,ac is independently selected from a number from 0 to 10,; and
the degree of alcoxylation established by the sum of a+b+c+d+e+f+g+h+k+l+r+s+t+u+v+w+x+y+z+aa+ab+ac corresponds to a number from 1 to 20; preferably a number from 1 to 10; and
n is selected from an integer from 1 to 4.

6. The additive for bitumen according to claim 5, wherein the alkoxylated alkylamine of formula (II) has formula (II1), 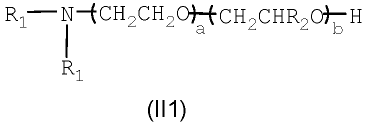
where the degree of alcoxylation established by the sum of subscripts a+b is a number from 1 to 20, preferably from 1 to 7; and
R₁, R₂, a and b are as defined in claim 5; or
wherein the alkoxylated alkylamine of formula (II) has formula (II2) 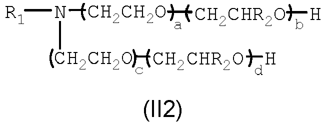
where the degree of alcoxylation established by the sum of subscripts a+b+c+d is a number from 1 to 20, preferably from 2 to 7; and
R₁, R₂, Z, a, b, c and d are as defined in claim 5; or
wherein the alkoxylated alkylamine of formula (II) has formula (II3) 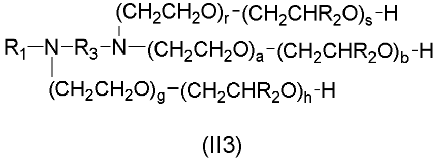
where the degree of alcoxylation established by the sum of subscripts a+b+g+h+r+s is a number from 1 to 20, preferably from 3 to 7; and
R₁, R₂, R₃, a, b, g, h, r and s are as defined in claim 5.

7. The additive for bitumen for asphalt mixes according to claim 5 or 6, further comprising at least one compound produced by means of the reaction of a fatty alcohol of formula (II4)
R₄-OH (II4)
with phosphoric acid, phosphorus pentoxide or mixtures thereof; where
R₄ is a saturated or unsaturated, linear or branched alkenyl alkyl group having from 6 to 22 carbon atoms;
and/or further comprising a fluidizing agent.

8. A bituminous composition for asphalt mixes comprising an additive for bitumen according to any of claims 1 to 7, further comprising bitumen, wherein the weight of the additive for bitumen is optionally between 0.2 and 3%, preferably between 0.3 and 1% and the weight of the bitumen is optionally between 97 and 99.8 %, preferably between 99.7 and 99%.

9. An asphalt mix comprising a bituminous composition for asphalt mixes according to claim 8, further comprising an aggregate or stone aggregate.

10. A method of preparing an additive for bitumen for asphalt mixes according to any of claims 1 to 7 which consists of:
- heating the precursor amine according to any of claims 1 to 7,
- gradually adding phosphorus pentoxide, phosphoric acid, or mixtures thereof, to the precursor amine, and
- then heating the reaction components at a temperature between 50°C and 130°C for at least 4 hours.

11. The method of preparing a bituminous composition according to claim 8, which comprises preparing the additive before the addition thereof to the bitumen, melting the additive and bitumen mixture, and then homogenizing same.

12. The method of preparing asphalt mixes according to claim 9, which comprises preparing the additive before the addition thereof to the bitumen, and after addition to the aggregate.

13. Use of an additive for bitumen as defined in any of claims 1 to 7, as a component in bituminous compositions and asphalt mixes, preferably wherein the asphalt mixes are warm mix asphalts with mixing and compaction temperatures between 100°C and 160°C when manufacturing and laying down the asphalt mixes.

14. Use of a bituminous composition as defined in claim 8, as a component in asphalt mixes, preferably wherein the asphalt mixes are warm mix asphalts with mixing and compaction temperatures between 100°C and 160°C when manufacturing and laying down the asphalt mixes.

15. Use of an asphalt mix as defined in claim 9 for paving roads, preferably wherein the asphalt mix is warm mix asphalt with mixing and compaction temperatures between 100°C and 160°C when manufacturing and laying down the asphalt mix.

## Patentansprüche

1. Additiv für Bitumen für Asphaltmischungen mindestens umfassend einen Phosphorsäureester von alkoxyliertem Amin dargestellt durch Formel (I) 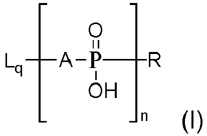 in welcher
q aus 0 und 1 ausgewählt wird;
L aus -H und der Gruppe 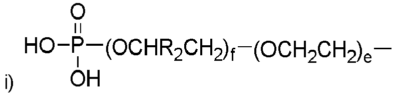
wenn q 1 ist, ausgewählt wird;
A für die Gruppe
B-(OCH₂CH₂)ₐ·(CHR₂CH₂O)_{b}- steht, und ii)
wobei A mit der Phosphorgruppe mittels des endständigen Sauerstoffs von -(CHR₂CH₂O)_{b}- verbunden ist;
R aus einem -OH und einer A' Gruppe ausgewählt wird;
A' für die Gruppe 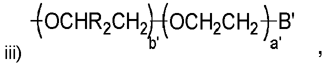 steht und
wobei A' mit der Phosphorgruppe mittels des endständigen Sauerstoffs von -(OCHR₂CH₂)_{b}'- verbunden ist
B aus
- den Gruppen 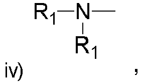 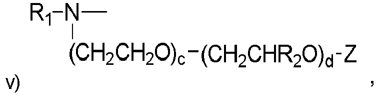 und 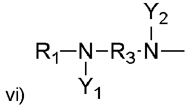 wenn q 0 ist; und aus
- den Gruppen 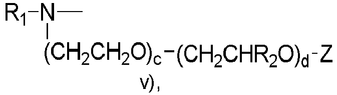 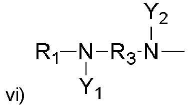 wenn q 1 ist; ausgewählt wird, und
wobei B mit dem A-Rest mittels des endständigen Stickstoffs der Gruppen iv), v) und vi) verbunden ist;
B' aus den Gruppen 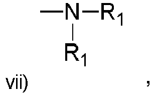 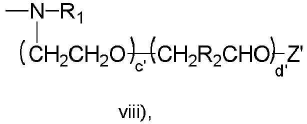 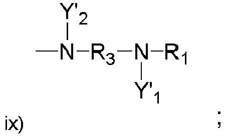 ausgewählt wird,
wobei B' mit dem A'-Rest mittels des endständigen Stickstoffs der Gruppen vii), viii) und ix) verbunden ist;
Z aus
- einer Einfachbindung, wenn q 1 ist, und wobei B mit L mittels der genannten Einfachbindung verbunden ist, und
- -H und der Gruppe 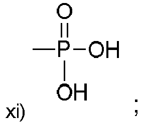 wenn q 0 ist, ausgewählt wird;
Z' aus -H und der Gruppe ausgewählt wird,
Y₁ aus -H und den Gruppen 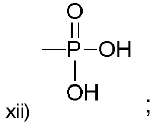 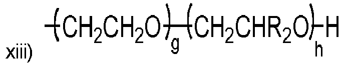 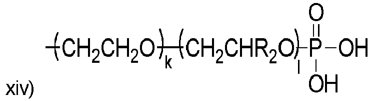 ausgewählt wird,
Y₂ aus H und den Gruppen 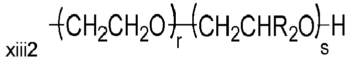 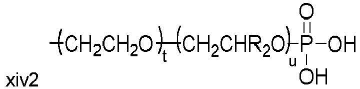
wenn q 0 ist, ausgewählt wird;
Y₁ aus einer der folgenden Gruppen 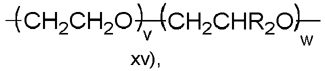 xvbis) 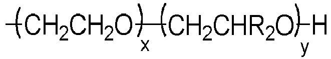 ausgewählt wird,
Y₂ aus einer der folgenden Gruppen 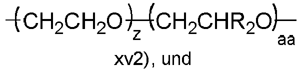 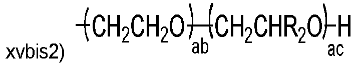
wenn q 1 ist, ausgewählt wird; mit der Maßgabe, dass, wenn Y₁ XV ist, dann Y₂ XVbis2 ist, und, wenn Y₁ XVbis ist, dann Y₂ XV2 ist;
und wobei B mit L mittels des endständigen Sauerstoffs von -(OCH₂CHR₂)_{w}- oder (OCH₂CHR₂)ₐₐ-;
verbunden ist,
Y₁' aus -H und den Gruppen 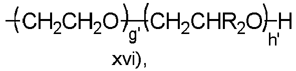 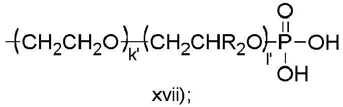
ausgewählt wird,
Y₂' aus -H und den Gruppen 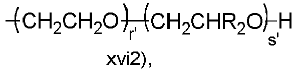 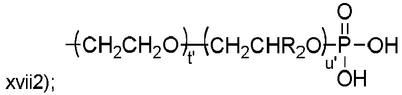 ausgewählt wird,
jedes R₁ unabhängig aus einer Alkylgruppe und einer endständigen Alkenylgruppe, linear oder verzweigt, aufweisend von 6 bis 22 Kohlenstoffatomen; vorzugsweise zwischen 12 und 22 Kohlenstoffatomen, und von 0 bis 3 Ungesättigtheiten ausgewählt wird, wobei die endständige Alkylgruppe und Alkenylgruppe wahlweise durch eine Carboxylgruppe substituiert sein kann;
jedes R₂ unabhängig aus Wasserstoff und einer endständigen Alkylgruppe aufweisend von 1 bis 4 Kohlenstoffatomen, vorzugsweise einer Methylgruppe, ausgewählt wird;
R₃ für eine nicht-endständige Alkylgruppe aufweisend von 1 bis 5 Kohlenstoffatomen steht;
R₄ eine gesättigte oder ungesättigte, lineare o verzweigte Alkyl- oder Alkenylgruppe aufweisend von 6 bis 22 Kohlenstoffatomen ist,
jedes der tiefgestellten Zeichen:
a,a',c,c',e,e',g,g',k,k',r,r',t,t',v,x,z,ab unabhängig aus einer Zahl von 0 bis 10; vorzugsweise einer Zahl von 1 bis 7, ausgewählt wird;
jedes der tiefgestellten Zeichen:
b,b',d,d',f,f',h,h',l,l',s,s',u,u',w,z,aa,ac' unabhängig aus einer Zahl von 0 bis 10 ausgewählt wird;
der durch die Summe der tiefgestellten Zeichen a+a'+b+b'+c+c'+d+d'+e+e'+f+f'+g+g'+h+h'+k+k'+l+l'+r+r'+s+s'+t+t'+u+u'+v+w+x+z+aa+ab+ac festgestellte Alkoxylierungsgrad eine Zahl von 1 bis 20; vorzugsweise eine Zahl von 1 bis 10 ist; und
n aus einer Zahl von 1 bis 4 ausgewählt wird.

2. Additiv für Bitumen nach Anspruch 1, wobei der Phosphorsäureester von alkoxyliertem Amin gemäß der Formel (I) Formel (I1) aufweist, 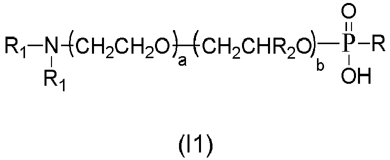
in welcher der durch die Summe der tiefgestellten Zeichen a+b+a'+b'+c'+d'+g'+h'+k'+l'+r'+s'+t'+u' festgestellte Alkoxylierungsgrad eine Zahl von 1 bis 20, vorzugsweise von 1 bis 7 ist; und R, R₁, R₂, a und b wie in Anspruch 1 definiert sind; oder
wobei der Phosphorsäureester von alkoxyliertem Amin gemäß der Formel (I) Formel (I2) aufweist, 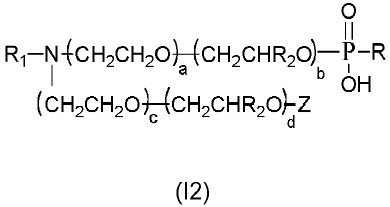
in welcher der durch die Summe der tiefgestellten Zeichen a+b+c+d+a'+b'+c'+d'+g'+h'+k'+l'+r'+s'+t'+u' festgestellte Alkoxylierungsgrad eine Zahl von 1 bis 20, vorzugsweise von 2 bis 7 ist; und
R, R₁, R₂, Z, a, b, c und d wie in Anspruch 1 definiert sind; oder
wobei der Phosphorsäureester von alkoxyliertem Amin gemäß der Formel (I) Formel (I3) aufweist, 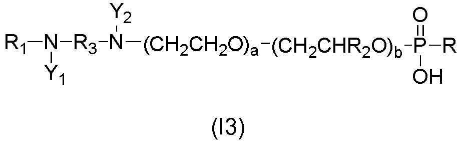
in welcher der durch die Summe der tiefgestellten Zeichen a+b+g+h+k+l+r+s+t+u+v+w+x+y+z+aa+ab+ac+a'+b'+c'+d'+ +g'+h'+k'+l'+r'+s'+t'+u' festgestellte Alkoxylierungsgrad eine Zahl von 1 bis 20, vorzugsweise von 3 bis 7 ist; und
R, R₁, R₂, R₃, Y₁, Y₂, a und b wie in Anspruch 1 definiert sind.

3. Additiv für Bitumen nach einem der Ansprüche 1 oder 2, zusätzlich umfassend einen Phosphorsäureester einer Fettsäure aufweisend Formel (I4) 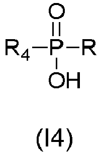 in welcher
R aus einem -OH und einer A'-Gruppe ausgewählt wird;
A' für die Gruppe 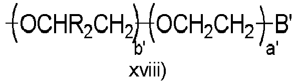 steht;
B' aus den Gruppen 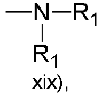 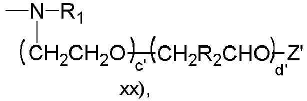 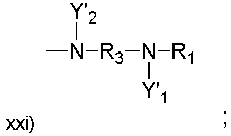 ausgewählt wird,
wobei B' mit dem A'-Rest mittels des endständigen Stickstoffs der Gruppen xix), xx) und xxi) verbunden ist;
Z' aus -H und der Gruppe 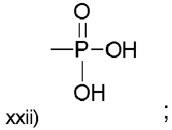 ausgewählt wird,
Y₁' aus -H und den Gruppen 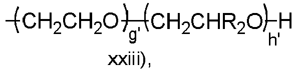 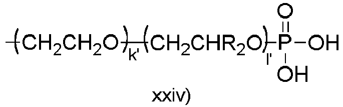 ausgewählt wird;
Y₂' aus -H und den Gruppen 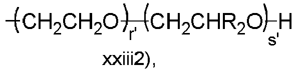 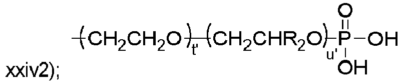 ausgewählt wird,
jedes R₁ unabhängig aus einer Alkylgruppe und einer endständigen Alkenylgruppe, linear oder verzweigt, aufweisend von 6 bis 22 Kohlenstoffatomen; vorzugsweise zwischen 12 und 22 Kohlenstoffatomen, und von 0 bis 3 Ungesättigtheiten ausgewählt wird, wobei die endständige Alkylgruppe und Alkenylgruppe wahlweise durch eine Carboxylgruppe substituiert sein kann;
jedes R₂ unabhängig aus Wasserstoff und einer endständigen Alkylgruppe aufweisend von 1 bis 4 Kohlenstoffatomen, vorzugsweise einer Methylgruppe, ausgewählt wird;
R₃ für eine nicht-endständige Alkylgruppe aufweisend von 1 bis 5 Kohlenstoffatomen steht;
R₄ eine gesättigte oder ungesättigte, lineare o verzweigte Alkyl- oder Alkenylgruppe aufweisend von 6 bis 22 Kohlenstoffatomen ist;
jedes von a',c',g',k',r',t' unabhängig aus einer Zahl von 0 bis 10; vorzugsweise einer Zahl von 1 bis 7, ausgewählt wird;
jedes von b',d',h',l',s',u' unabhängig aus einer Zahl von 0 bis 10 ausgewählt wird;
der durch die Summe von a'+b'+c'+d'+g'+h'+k'+l'+r'+s'+t'+u' festgestellte Alkoxylierungsgrad eine Zahl von 1 bis 20; vorzugsweise einer Zahl von 1 bis 10 ist; und
n aus einer Zahl von 1 bis 4 ausgewählt wird.

4. Additiv für Bitumen nach einem der Ansprüche 1 bis 3, zusätzlich umfassend ein Fluidisierungsmittel.

5. Additiv für Bitumen für Asphaltmischungen mindestens umfassend eine Verbindung hergestellt mittels der Reaktion eines alkoxylierten Alkylamins der Formel (II) mit Phosphorsäure, Phosphorpentoxid oder Mischungen derselben 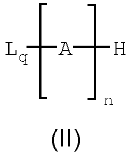 in welcher
q aus 0 und 1 ausgewählt wird;
L aus -H und der Gruppe 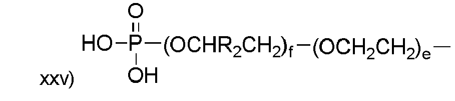 ausgewählt wird,
A für die Gruppe und
B aus 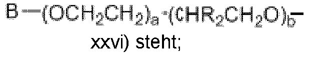
- den Gruppen 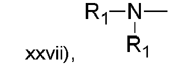 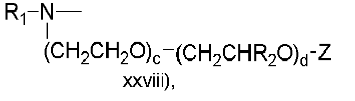 und 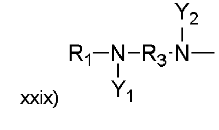 wenn q 0 ist; und aus
- den Gruppen 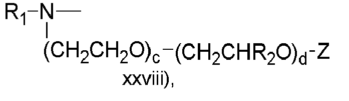 und 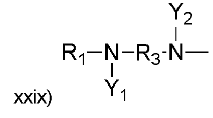 wenn q 1 ist, ausgewählt wird; und
wobei B mit dem A-Rest mittels des endständigen Stickstoffs der Gruppen xxvii), xxviii) und xxix) verbunden ist;
Z aus
- einer Einfachbindung, wenn q 1 ist und wobei B mit L mittels der genannten Bindung verbunden ist, und
- -H und der Gruppe 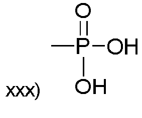 wenn q 0 ist, ausgewählt wird;
Y₁ aus
- -H und den Gruppen 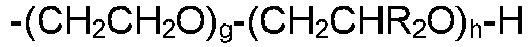 xxxi), und xxxii), 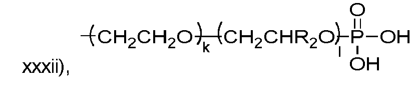 ausgewählt wird,
Y₂ aus
- H und den Gruppen 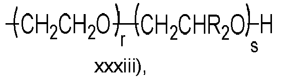 und 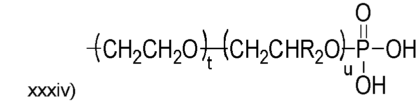 wenn q 0 ist, ausgewählt wird;
Y₁ aus den folgenden Gruppen: und 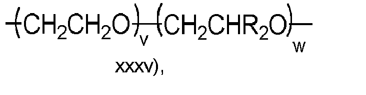 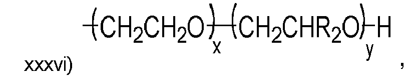 ausgewählt wird, und
Y₂ aus einer der folgenden Gruppen: 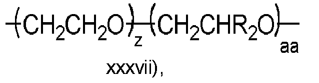 und 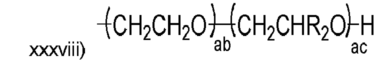
wenn q 1 ist, ausgewählt wird; mit der Maßgabe, dass, wenn Y₁ XXXV ist, dann Y₂ xxxviii ist, und wenn Y₁ xxxvi ist, dann Y₂ xxxvii ist;
und wobei B mit L mittels des endständigen Sauerstoffs von -(OCH₂CHR₂)_{w}- oder -(OCH₂CHR₂)ₐₐ-
verbunden ist;
jedes R₁ unabhängig aus einer Alkylgruppe und einer endständigen Alkenylgruppe, linear oder verzweigt, aufweisend von 6 bis 22 Kohlenstoffatomen; vorzugsweise zwischen 12 und 22 Kohlenstoffatomen, und von 0 bis 3 Ungesättigtheiten ausgewählt wird, wobei die endständige Alkylgruppe und Alkenylgruppe wahlweise durch eine Carboxylgruppe substituiert sein kann;
jedes R₂ unabhängig aus Wasserstoff und einer endständigen Alkylgruppe aufweisend von 1 bis 4 Kohlenstoffatomen; vorzugsweise einer Methylgruppe, ausgewählt wird;
R₃ eine nicht-endständige Alkylgruppe aufweisend von 1 bis 5 Kohlenstoffatomen ist;
jedes von a,c,e,g,k,r,t,v,x,z,ab unabhängig aus einer Zahl von 0 bis 10; vorzugsweise einer Zahl von 1 bis 7, ausgewählt wird;
jedes von b,d,f,h,l,s,u, w,y,aa,ac unabhängig aus einer Zahl von 0 bis 10 ausgewählt wird; und
der durch die Summe von a+b+c+d+e+f+g+h+k+l+r+s+t+u+v+w+x+y+z+aa+ab+ac festgestellte Alkoxylierungsgrad einer Zahl von 1 bis 20; vorzugsweise einer Zahl von 1 bis 10, entspricht; und
n aus einer Ganzzahl von 1 bis 4 ausgewählt wird.

6. Additiv für Bitumen nach Anspruch 5, wobei das alkoxylierte Alkylamin der Formel (II) Formel (II1) aufweist, 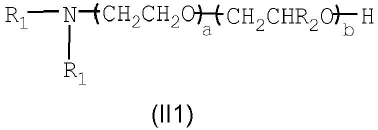
wobei der durch die Summe der tiefgestellten Zeichen a+b festgestellte Alkoxylierungsgrad eine Zahl von 1 bis 20, vorzugsweise von 1 bis 7 ist; und
R₁, R₂, a und b wie in Anspruch 5 definiert sind; oder
wobei das alkoxylierte Alkylamin der Formel (II) Formel (II2) aufweist, 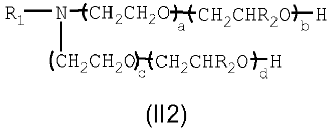
wobei der durch die Summe der tiefgestellten Zeichen a+b+c+d festgestellte Alkoxylierungsgrad eine Zahl von 1 bis 20, vorzugsweise von 2 bis 7 ist; und
R₁, R₂, Z, a, b, c und d wie in Anspruch 5 definiert sind; oder
wobei das alkoxylierte Alkylamin der Formel (II) Formel (II3) aufweist, 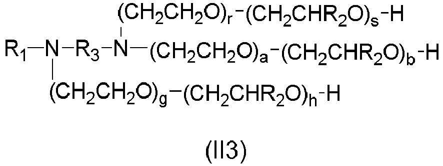
wobei der durch die Summe der tiefgestellten Zeichen a+b+g+h+r+s festgestellte Alkoxylierungsgrad eine Zahl von 1 bis 20, vorzugsweise von 3 bis 7 ist; und
R₁, R₂, R₃, a, b, g, h, r und s wie in Anspruch 5 definiert sind.

7. Additiv für Bitumen für Asphaltmischungen nach Anspruch 5 oder 6, zusätzlich mindestens umfassend eine Verbindung hergestellt mittels der Reaktion einer Fettsäure der Formel (II4)
R₄-OH (II4)
mit Phosphorsäure, Phosphorpentoxid oder Mischungen derselben; in welcher
R₄ eine gesättigte oder ungesättigte, lineare oder verzweigte Alkenyl-/Alkylgruppe aufweisend von 6 bis 22 Kohlenstoffatomen ist;
und/oder zusätzlich umfassend ein Fluidisierungsmittel.

8. Bitumenhaltige Zusammensetzung für Asphaltmischungen umfassend ein Additiv für Bitumen nach einem der Ansprüche 1 bis 7, zusätzlich umfassend Bitumen, wobei das Gewicht des Additivs für Bitumen wahlweise zwischen 0,2 und 3 %, vorzugsweise zwischen 0,3 und 1 % liegt, und das Gewicht des Bitumens wahlweise zwischen 97 und 99,8 %, vorzugsweise zwischen 99,7 und 99 % liegt.

9. Asphaltmischung umfassend eine bitumenhaltige Zusammensetzung für Asphaltmischungen nach Anspruch 8, zusätzlich umfassend einen Zuschlag oder Steinzuschlag.

10. Verfahren zur Zubereitung eines Additivs für Bitumen für Asphaltmischungen nach einem der Ansprüche 1 bis 7, welches aus Folgendem besteht:
- das Erhitzen des Vorläuferamins nach einem der Ansprüche 1 bis 7,
- das allmähliche Hinzufügen von Phosphorpentoxid, Phosphorsäure, oder Mischungen derselben, zum Vorläuferamin, und
- dann das Erhitzen der Reaktionskomponenten bei einer Temperatur zwischen 50 °C und 130 °C mindestens 4 Stunden lang.

11. Verfahren zur Zubereitung einer bitumenhaltigen Zusammensetzung nach Anspruch 8, welches das Zubereiten des Additivs vor dem Hinzufügen desselben zum Bitumen, das Schmelzen der Additiv- und Bitumenmischung, und dann das Homogenisieren derselben umfasst.

12. Verfahren zur Zubereitung von Asphaltmischungen nach Anspruch 9, welches das Zubereiten des Additivs vor dem Hinzufügen desselben zum Bitumen, und nach dem Hinzufügen zum Zuschlag umfasst.

13. Verwendung eines Additivs für Bitumen nach einem der Ansprüche 1 bis 7, als Komponente in bitumenhaltigen Zusammensetzungen und Asphaltmischungen, wobei vorzugsweise die Asphaltmischungen Warmmischasphalte mit Misch- und Verdichtungstemperaturen zwischen 100 °C und 160 °C sind, wenn die Asphaltmischungen gefertigt und gelegt werden.

14. Verwendung einer bitumenhaltigen Zusammensetzung nach Anspruch 8, als Komponente in Asphaltmischungen, wobei vorzugsweise die Asphaltmischungen Warmmischasphalte mit Misch- und Verdichtungstemperaturen zwischen 100 °C und 160 °C sind, wenn die Asphaltmischungen gefertigt und gelegt werden.

15. Verwendung einer Asphaltmischung nach Anspruch 9 zur Straßenpflasterung, wobei vorzugsweise die Asphaltmischung Warmmischasphalt mit Misch- und Verdichtungstemperaturen zwischen 100 °C und 160 °C ist, wenn die Asphaltmischung gefertigt und gelegt wird.

## Revendications

1. Additif pour bitume pour des mélanges d'asphalte comprenant au moins un ester phosphorique d'amine alcoxylée représenté par la formule (I) 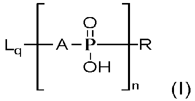 où
q est sélectionné parmi 0 et 1 ;
L est sélectionné parmi -H et le groupe 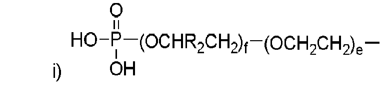 lorsque q est 1 ;
A représente le groupe
ii) B-(OCH₂CH₂)ₐ-(CHR₂CH₂O)_{b}-,
et
où A est lié au groupe phosphorique au moyen de l'oxygène terminal de -(CHR₂CH₂O)_{b}- ;
R est sélectionné parmi un groupe -OH et A' ;
A' représente le groupe 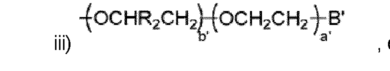 et
où A' est lié au groupe phosphorique au moyen de l'oxygène terminal de -(OCHR₂CH₂)_{b'}-
B est sélectionné parmi
- les groupes 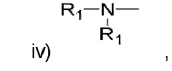 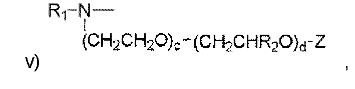 et 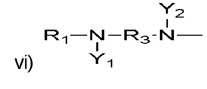 lorsque q est 0 ; et parmi
- les groupes 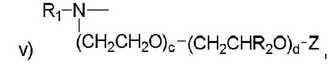 et 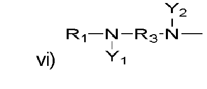 lorsque q est 1 ; et
où B est lié au groupement A au moyen de l'azote terminal des groupes iv), v) et vi) ;
B' est sélectionné parmi les groupes 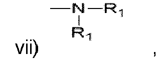 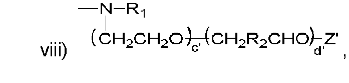 et 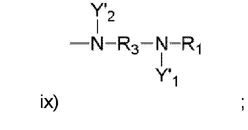
où B' est lié au groupement A' au moyen de l'azote terminal des groupes vii), viii) et ix) ;
Z est sélectionné parmi
- une liaison simple lorsque q est 1 et où B est lié à L au moyen de ladite liaison simple, et
--H et le groupe 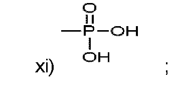 lorsque q est 0 ;
Z' est sélectionné parmi -H et le groupe 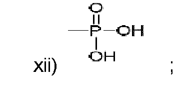
Y₁ est sélectionné parmi -H et les groupes 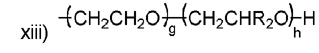 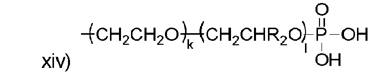
Y₂ est sélectionné parmi H et les groupes 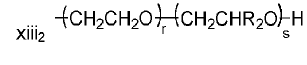 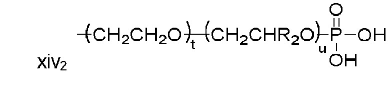 lorsque q est 0 ;
Y₁ est sélectionné parmi un des groupes suivants 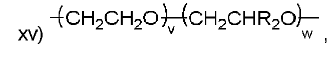 et 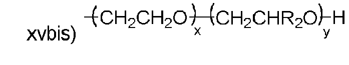
Y₂ est sélectionné parmi un des groupes suivants 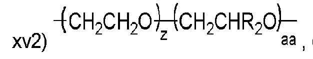 et 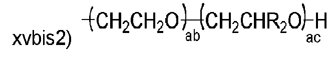
lorsque q est 1 ; à condition que lorsque Y₁ est XV, alors Y₂ est Xvbis2, et que lorsque Y₁ est XVbis, alors Y₂ est XV2 ;
et où B est lié à L au moyen de l'oxygène terminal de -(OCH₂CHR₂)_{w}- ou (OCH₂CHR₂)ₐₐ- ;
Y₁' est sélectionné parmi -H et les groupes 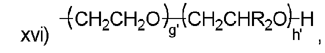 et 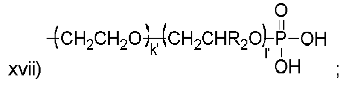
Y₂' est sélectionné parmi -H et les groupes 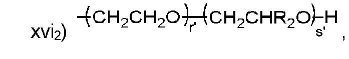 et 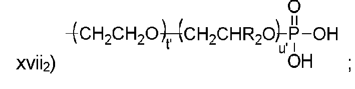
chaque R₁ est sélectionné indépendamment parmi un groupe alkyle et un groupe alcényle terminal, linéaire ou ramifié, ayant de 6 à 22 atomes de carbone ; préférablement entre 12 et 22 atomes de carbone, et de 0 à 3 insaturations, dans lequel le groupe alkyle terminal et le groupe alcényle peuvent être optionnellement substitués par un groupe carboxyle ;
chaque R₂ est sélectionné indépendamment parmi hydrogène et un groupe alkyle terminal ayant de 1 à 4 atomes de carbone, préférablement un groupe méthyle ;
R₃ représente un groupe alkyle non terminal ayant de 1 à 5 atomes de carbone ;
R₄ est un groupe alkyle ou alcényle linéaire ou ramifié, saturé ou insaturé, ayant de 6 à 22 atomes de carbone,
chacun des indices :
a, a', c, c', e, e', g, g', k, k', r, r', t, t', v, x, z, ab est sélectionné indépendamment parmi un nombre de 0 à 10 ; préférablement un nombre de 1 à 7 ;
chacun des indices :
b, b', d, d', f, f', h, h', l, l', s, s', u, u', w, z, aa, ac' est sélectionné indépendamment parmi un nombre de 0 à 10 ;
le degré d'alcoxylation établi par la somme des indices a+a'+b+b'+c+c'+d+d'+e+e'+f+f'+g+g'+h+h'+k+k'+l+l'+r+r'+s+s'+t+t'+u+u'+v+w+x+z+aa+ab+ac est un nombre de 1 à 20 ; préférablement un nombre de 1 à 10 ; et
n est sélectionné parmi un nombre de 1 à 4.

2. Additif pour bitume selon la revendication 1, dans lequel l'ester phosphorique d'amine alcoxylée selon la formule (I) a une formule (I1) 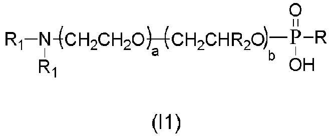
où le degré d'alcoxylation établi par la somme des indices a+b+a'+b'+c'+d'+g'+h'+k'+l'+r'+s'+t'+u' est un nombre de 1 à 20, préférablement de 1 à 7 ; et R, R₁, R₂, a et b sont tels que définis dans la revendication 1 ; ou
dans lequel l'ester phosphorique d'amine alcoxylée selon la formule (I) a une formule (I2), 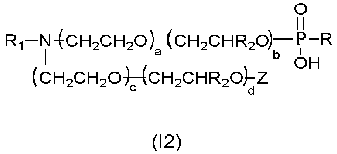
où le degré d'alcoxylation établi par la somme des indices a+b+c+d+a'+b'+c'+d'+g'+h'+k'+l'+r'+s'+t'+u' est un nombre de 1 à 20, préférablement de 2 à 7 ; et
R, R₁, R₂, Z, a, b, c et d sont tels que définis dans la revendication 1 ; ou
dans lequel l'ester phosphorique d'amine alcoxylée selon la formule (I) a une formule (I3), 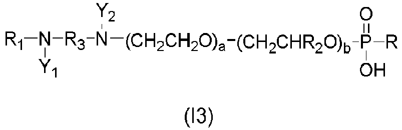
où le degré d'alcoxylation établi par la somme des indices a+b+g+h+k+l+r+s+t+u+v+w+x+y+z+aa+ab+ac+a'+b'+c'+d'+ +g'+h'+k'+l'+r'+s'+t'+u' est un nombre de 1 à 20, préférablement de 3 à 7 ; et
R, R₁, R₂, R₃, Y₁, Y₂, a et b sont tels que définis dans la revendication 1.

3. Additif pour bitume selon la revendication 1 ou 2, comprenant en outre un ester phosphorique d'alcool gras ayant la formule (I4) 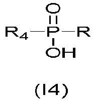 où
R est sélectionné parmi-OH et un groupe A' ;
A' représente le groupe 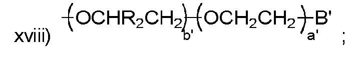
B' est sélectionné parmi les groupes 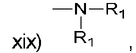 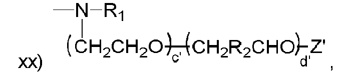 et 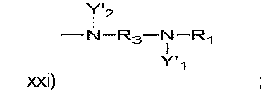
où B' est lié au groupement A' au moyen de l'azote terminal des groupes xix), xx) et xxi) ;
Z' est sélectionné parmi -H et le groupe 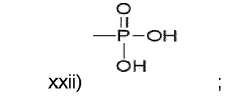
Y₁' est sélectionné parmi -H et les groupes 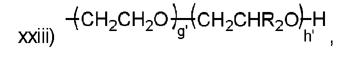 et 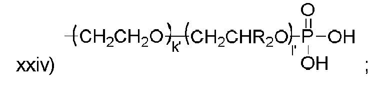
Y₂' est sélectionné parmi -H et les groupes 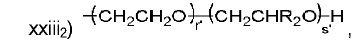 et 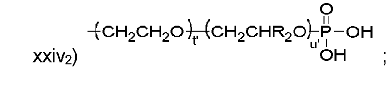
chaque R₁ est sélectionné indépendamment parmi un groupe alkyle et d'un groupe alcényle terminal, linéaire ou ramifié, ayant de 6 à 22 atomes de carbone ; préférablement entre 12 et 22 atomes de carbone, et de 0 à 3 insaturations, dans lequel le groupe alkyle terminal et le groupe alcényle peuvent être optionnellement substitués par un groupe carboxyle ;
chaque R₂ est sélectionné indépendamment parmi hydrogène et un groupe alkyle terminal ayant de 1 à 4 atomes de carbone, préférablement un groupe méthyle ;
R₃ représente un groupe alkyle non terminal ayant de 1 à 5 atomes de carbone ;
R₄ est un groupe alkyle ou alcényle linéaire ou ramifié, saturé ou insaturé, ayant de 6 à 22 atomes de carbone ;
chacun de a', c', g', k', r', t' est sélectionné indépendamment parmi un nombre de 0 à 10 ; préférablement un nombre de 1 à 7 ;
chacun de b', d', h', l', s', u' est sélectionné indépendamment parmi un nombre de 0 à 10 ;
le degré d'alcoxylation établi par la somme de a'+b'+c'+d'+g'+h'+k'+l'+r'+s'+t'+u' est un nombre de 1 à 20 ; préférablement un nombre de 1 à 10 ; et
n est sélectionné parmi un nombre de 1 à 4.

4. Additif pour bitume selon l'une quelconque des revendications 1 à 3, comprenant en outre un agent fluidifiant.

5. Additif pour bitume pour des mélanges d'asphalte comprenant au moins un composé produit au moyen de la réaction d'une alkylamine alcoxylée de formule (II) avec de l'acide phosphorique, du pentoxyde phosphoreux ou des mélanges de ceux-ci où 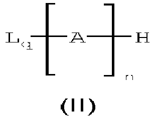
q est sélectionné parmi 0 et 1 ;
L est sélectionné parmi -H et le groupe 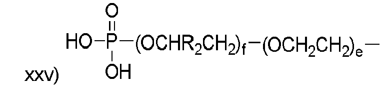
A représente le groupe 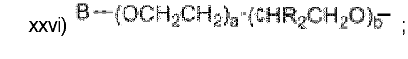 et
B est sélectionné parmi
- les groupes 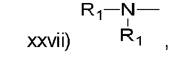 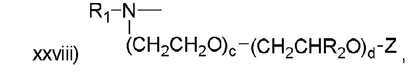 et 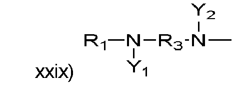 lorsque q est 0 ; et parmi
- les groupes 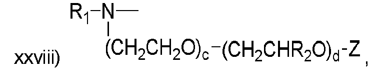 et 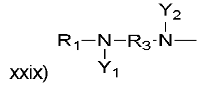 lorsque q est 1 ; et
où B est lié au groupement A au moyen de l'azote terminal des groupes xxvii), xxviii) et xxix) ;
Z est sélectionné parmi
- une liaison simple lorsque q est 1 et où B est lié à L au moyen de ladite liaison, et
- -H et le groupe 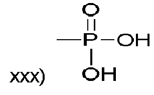 lorsque q est 0 ;
Y₁ est sélectionné parmi
- -H et les groupes 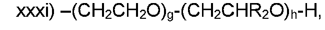 et 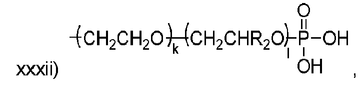
Y₂ est sélectionné parmi
- H et les groupes 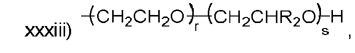 et 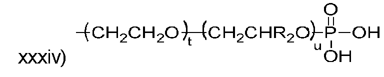 lorsque q est 0 ;
Y₁ est sélectionné parmi groupes suivants : 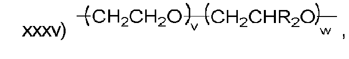 et 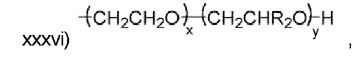 et
Y₂ est sélectionné parmi un des groupes suivants : 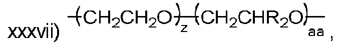 et 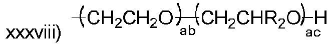
lorsque q est 1 ; à condition que lorsque Y₁ est XXXV alors Y₂ est xxxviii, et que lorsque Y₁ est xxxvi, alors Y₂ est xxxvii ;
et où B est lié à L au moyen de l'oxygène terminal de -(OCH₂CHR₂)_{w}- ou -(OCH₂CHR₂)ₐₐ- ;
chaque R₁ est sélectionné indépendamment parmi un groupe alkyle et d'un groupe alcényle terminal, linéaire ou ramifié, ayant de 6 à 22 atomes de carbone ; préférablement entre 12 et 22 atomes de carbone, et de 0 à 3 insaturations, dans lequel le groupe alkyle terminal et le groupe alcényle peuvent être optionnellement substitués par un groupe carboxyle ;
chaque R₂ est sélectionné indépendamment parmi hydrogène et un groupe alkyle terminal ayant de 1 à 4 atomes de carbone ; préférablement un groupe méthyle ;
R₃ est un groupe alkyle non terminal ayant de 1 à 5 atomes de carbone ;
chacun de a, c, e, g, k, r, t, v, x, z, ab est sélectionné indépendamment parmi un nombre de 0 à 10 ; préférablement un nombre de 1 à 7 ;
chacun de b, d, f, h, l, s, u, w, y, aa, ac est sélectionné indépendamment parmi un nombre de 0 à 10, et
le degré d'alcoxylation établi par la somme de a+b+c+d+e+f+g+h+k+l+r+s+t+u+v+w+x+y+z+aa+ab+ac correspond à un nombre de 1 à 20 ; préférablement à un nombre de 1 à 10 ; et
n est sélectionné parmi un nombre entier de 1 à 4.

6. Additif pour bitume selon la revendication 5, dans lequel l'alkylamine alcoxylée de formule (II) a une formule (II1), 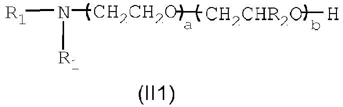
où le degré d'alcoxylation établi par la somme d'indices a+b est un nombre de 1 à 20, préférablement de 1 à 7 ; et
R₁, R₂, a et b sont tels que définis dans la revendication 5 ; ou
dans lequel l'alkylamine alcoxylée de formule (II) a une formule (II2) 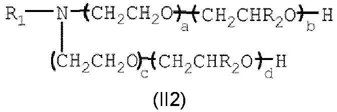
où le degré d'alcoxylation établi par la somme d'indices a+b+c+d est un nombre de 1 à 20, préférablement de 2 à 7 ; et
R₁, R₂, Z, a, b, c et d sont tels que définis dans la revendication 5 ; ou
dans lequel l'alkylamine alcoxylée de formule (II) a une formule (II3) 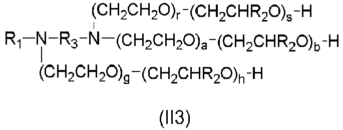
où le degré d'alcoxylation établi par la somme d'indices a+b+g+h+r+s est un nombre de 1 à 20, préférablement de 3 à 7 ; et
R₁, R₂, R₃, a, b, g, h, r et s sont tels que définis dans la revendication 5.

7. Additif pour bitume pour des mélanges d'asphalte selon la revendication 5 ou 6, comprenant en outre au moins un composé produit par la réaction d'un alcool gras de formule (II4)
R₄-OH (II4)
avec de l'acide phosphorique, du pentoxyde phosphoreux ou des mélanges de ceux-ci ; où
R₄ est un groupe alcényle/alkyle linéaire ou ramifié, saturé ou insaturé, ayant de 6 à 22 atomes de carbone ;
et/ou comprenant en outre un agent fluidifiant.

8. Composition bitumineuse pour des mélanges d'asphalte comprenant un additif pour bitume selon l'une quelconque des revendications 1 à 7, comprenant en outre du bitume, dans laquelle le poids de l'additif pour bitume est optionnellement entre 0,2 et 3 %, préférablement entre 0,3 et 1 %, et le poids du bitume est optionnellement entre 97 et 99,8 %, préférablement entre 99,7 et 99 %.

9. Mélange d'asphalte comprenant une composition bitumineuse pour des mélanges d'asphalte selon la revendication 8, comprenant en outre un agrégat ou un agrégat pierreux.

10. Procédé de préparation d'un additif pour bitume pour des mélanges d'asphalte selon l'une quelconque des revendications 1 à 7 qui consiste à :
- chauffer l'amine précurseuse selon l'une quelconque des revendications 1 à 7,
- ajouter graduellement du pentoxyde phosphoreux, de l'acide phosphorique ou des mélanges de ceux-ci à l'amine précurseuse, et
- chauffer ensuite les composants de réaction à une température entre 50 °C et 130 °C pendant au moins 4 heures.

11. Procédé de préparation d'une composition bitumineuse selon la revendication 8, qui comprend préparer l'additif avant l'ajout de celui-ci au bitume, fondre le mélange d'additif et de bitume, puis homogénéiser celui-ci.

12. Procédé de préparation de mélanges d'asphalte selon la revendication 9, qui comprend préparer l'additif avant l'ajout de celui-ci au bitume, et après l'ajout à l'agrégat.

13. Utilisation d'un additif pour bitume selon l'une quelconque des revendications 1 à 7, comme un composant dans des compositions bitumineuses et des mélanges d'asphalte, préférablement dans laquelle les mélanges d'asphalte sont des asphaltes mélangés à chaud avec des températures de mélange et de compactage entre 100 °C et 160 °C lors de la fabrication et de la pose des mélanges d'asphalte.

14. Utilisation d'une composition bitumineuse selon la revendication 8, comme un composant de mélanges d'asphalte, préférablement dans laquelle les mélanges d'asphalte sont des asphaltes mélangés à chaud avec des températures de mélange et de compactage entre 100 °C et 160 °C lors de la fabrication et de la pose des mélanges d'asphalte.

15. Utilisation d'un mélange d'asphalte selon la revendication 9 pour revêtement de routes, préférablement dans laquelle le mélange d'asphalte est de l'asphalte mélangé à chaud avec des températures de mélange et de compactage entre 100 °C et 160 °C lors de la fabrication et de la pose des mélanges d'asphalte.
